# EUROPÄISCHE PATENTSCHRIFT

(11) **EP 2 408 684 B1**
(45) Veröffentlichungstag und Bekanntmachung des Hinweises auf die Patenterteilung: **21.08.2013**
(21) Anmeldenummer: 10709011.0
(22) Anmeldetag: 17.03.2010
(51) Int. Cl.: B65D 65/46, C08K 3/08, C08J 5/12

(54) **BIOLOGISCH ABBAUBARES MATERIAL AUS EINEM POLYMER ENTHALTENDEN PORÖSEN METALLORGANISCHEN GERÜSTMATERIAL**
BIOLOGICALLY DEGRADABLE MATERIAL BASED ON A POLYMERIC MATERIAL CONTAINING POROUS ORGANOMETALLIC NETWORKS
MATERIAUX BIODEGRADABLES SUR BASE DE POLYMERES CONTENANT DES COMPOSES ORGANOMETALLIQUES RAMIFIES POREUX

(30) Priorität: 20.03.2009 EP 09155687
(43) Veröffentlichungstag der Anmeldung: 25.01.2012
(73) Patentinhaber: BASF SE, 67056 Ludwigshafen (DE)
(72) Erfinder: LEUNG, Emi, Somerset, NJ 08873 (DE); MÜLLER, Ulrich, 67435 Neustadt (DE); SANDLER, Jan Kurt Walter, 69126 Heidelberg (DE); SKUPIN, Gabriel, 67346 Speyer (DE); YAMAMOTO, Motonori, 68199 Mannheim (DE); VAN DER NET, Antje, 67061 Ludwigshafen (DE)
(86) Internationale Anmeldenummer: PCT/EP2010/053467
(87) Internationale Veröffentlichungsnummer: WO 2010/106105

(56) Entgegenhaltungen:
- DE-A1- 19 954 404
- US-A1- 2008 227 634

## Beschreibung

### Beschreibung

Die vorliegende Erfindung betrifft biologisch abbaubares Material in Form einer Folie oder eines Films, Lebensmittelverpackungen enthaltend ein solches Material sowie dessen Verwendung.

Es ist bekannt, dass Ethen die Reifung von Lebensmitteln wie Obst und Gemüse vorantreiben kann. Dies wird dahingehend ausgenutzt, dass zur gezielten Reifung beispielsweise von Obst eine Ethenbehandlung erfolgt. Gleichsam ist die Abgabe von Ethen durch das Obst selbst in die Umgebung während des Transports nachteilig.

Es wird daher versucht, das von Lebensmitteln wie Obst freigesetzte Ethen dem Umgebungsgas wieder zu entziehen, sofern das Lebensmittel in einem abgeschlossenen Kompartiment wie einer Verpackung vorliegt. Hierfür werden in der Literatur verschiedene Absorptionsmittel vorgeschlagen. Hierbei seien beispielsweise Aktivkohle, Zeolithe oder Silica genannt.

So beschreibt beispielsweise EP-A 1 106 233 ein Verfahren zur Adsorption von Ethylen aus Gasen an einem organophilen Zeolith als Absorptionsmittel zum Lagern und Transportieren von leicht verderblichen Früchten, Pflanzen und Gemüsen, wobei die Lagerung und der Transport in nahezu geschlossenen Räumen stattfindet.

Weiterhin wird in EP-A 1 525 802 die Hemmung des Reifeprozesses insbesondere von Obst vorgeschlagen, wobei eine Folie, welche ein Zeolith aufweist, zur Verpackung dient.

Darüber hinaus wird aus umweltpolitischer Sicht an solche Verpackungsmaterialien wie Folien die Anforderung gestellt, dass diese leicht zu entsorgen bzw. zu recyceln sind. Aufgrund der aus lebensmitteltechnischer Sicht hohen Anforderung an Verpackungsmaterialien für Nahrungsmittel wie Obst und Gemüse werden insbesondere biologisch abbaubare Stoffe bevorzugt. Verpackungsmaterialien wie Folien aus biologisch abbaubaren Polymeren sind ebenfalls im Stand der Technik bekannt. So beschreiben beispielsweise WO-A 2005/017034 und WO-A 2006/074815 solche biologisch abbaubaren Polyestermischungen.

DE 19954404 betrifft ein- oder mehrschichtige, biologisch abbaubare, thermoplastische Folien mit verbesserten Barriereeigenschaften gegenüber Geruchsstoffen und deren Verwendung in Verpackungsmaterialien und Hygienesowie Kosmetikartikeln.

Trotz der im Stand der Technik bekannten Materialien für den Lebensmittelgebrauch besteht nach wie vor ein Bedarf an alternativen Materialien.

Eine Aufgabe der vorliegenden Erfindung liegt somit darin, solche alternativen Materialien zur Verfügung zu stellen, die auf der einen Seite den unerwünschten Reifungsprozess während der Lagerung oder des Transports von Lebensmitteln sowie die Umfeldverträglichkeit der für die Lebensmittel verwendeten Verpackungen genügt.

Die Aufgabe wird gelöst durch ein biologisch abbaubares Material in Form einer Folie oder eines Films, wobei das Material ein Polymer enthält, wobei das Polymer mindestens ein poröses metallorganisches Gerüstmaterial enthält und das mindestens eine poröse metallorganische Gerüstmaterial mindestens eine an mindestens ein Metallion koordinativ gebundene, mindestens zweizähnige organische Verbindung enthält.

Es hat sich nämlich gezeigt, dass an sich bekannte biologisch abbaubare Polymere zur Absorption von Ethylen in besonders geeigneter Weise poröse metallorganische Gerüstmaterialien als Additiv in dem besagten Polymer enthalten können, und dabei die gewünschte Absorption erfolgen kann.

Biologisch abbaubare Materialien in Form einer Folie oder eines Filmes, welches ein Polymer enthält, sind im Stand der Technik bekannt. Auch dessen Verwendung als Verpackungsmaterial ist beschrieben.

Hierbei können beispielsweise Folien vorzugsweise in einer Dicke von weniger als 100 µm eingesetzt werden. Auch die Dicke eines Filmes kann der entsprechenden Anwendung angepasst werden. Vorzugsweise handelt es sich jedoch bei dem biologisch abbaubaren Material um eine Folie. Weiter bevorzugt weisen die Folie bzw. der Film eine Dichte von weniger als 50 µm, insbesondere von weniger als 25 µm auf.

Im Rahmen der vorliegenden Erfindung soll ein polymeres Material dann als biologisch abbaubar gelten, wenn es gemäß DIN EN 13432, Teil 2 vollständig biologisch abbaubar ist, was dann vorliegt, wenn mindestens 90 % des organischen Kohlenstoffs des Materials in einem Prüfzeitraum von maximal 180 Tagen umgesetzt worden ist.

Vorzugsweise handelt es sich bei dem Polymer um ein Polyester auf Basis von aliphatischen und aromatischen Dicarbonsäuren und aliphatischen Dihydroxyverbindungen. Solche Materialien werden unter anderem unter dem Markennamen Ecoflex^{®} der BASF SE vertrieben.

Beispielhafte Polymere sind in Form von Mischungen in WO-A 2005/017034 und WO-A 2006/074815 beschrieben.

Dementsprechend können die bevorzugten Polyester auf Basis von aliphatischen und aromatischen Dicarbonsäuren und aliphatischen Dihydroxyverbindungen als solche vorliegen oder als Komponente i wie nachfolgend beschrieben.

Biologisch abbaubare Mischungen aus i) synthetisch hergestellten Polyestermaterialien und ii) Homo- oder Copolyestern - ausgewählt aus der Gruppe bestehend aus Polylactid, Polycaprolacton, Polyhydroxyalkanoate und Polyester aus aliphatischen Dicarbonsäuren und aliphatischen Diolen - sind bekannt (siehe EP-B 792 309). Solche Mischungen vereinigen idealerweise die wünschenswerten Eigenschaften der Einzelkomponenten, beispielsweise die in der Regel guten Verarbeitungs- und mechanischen Eigenschaften der synthetischen Polyester mit der üblicherweise kostengünstigeren Verfügbarkeit und ökologisch unbedenklichen Herstellung und Entsorgung der unter ii) oben aufgeführten Polymere wie Polylactid, Polycaprolacton, Polyhydroxyalkanoate und Polyester aus aliphatischen Dicarbonsäuren und aliphatischen Diolen.

Die oben beschriebenen Polyester i) und ii) können separat oder als Mischung eingesetzt werden. Gleiches gilt für Komponente iii), die nachfolgend näher erläutert ist. Bevorzugt sind die Polymere i) und Mischungen mit diesen. Nachfolgend wird bevorzugt auf Mischungen der Polymere i), ii) und iii) eingegangen. Gleiches gilt jedoch im Rahmen der vorliegenden Erfindung auch, wenn nur ein Polymer, wie beispielsweise Polymer i) als Teil des biologisch abbaubaren Materials vorliegt.

Prinzipiell kommen für die Herstellung der biologisch abbaubaren Polyestermischungen als Komponente i alle Polyester auf Basis von aliphatischen und aromatischen Dicarbonsäuren und aliphatischen Dihydroxyverbindung, so genannte teilaromatische Polyester, in Betracht. Selbstverständlich sind auch Mischungen mehrerer solcher Polyester als Komponente i geeignet.

Unter teilaromatischen Polyestern sollen erfindungsgemäß auch Polyesterderivate verstanden werden wie Polyetherester, Polyesteramide oder Polyetheresteramide. Zu den geeigneten teilaromatischen Polyestern gehören lineare nicht kettenverlängerte Polyester (WO 92/09654). Bevorzugt werden kettenverlängerte und/oder verzweigte teilaromatische Polyester. Letztere sind aus den eingangs genannten Schriften, WO 96/15173 bis 15176, 21689 bis 21692, 25446, 25448 oder der WO 98/12242, bekannt, auf die ausdrücklich Bezug genommen wird. Mischungen unterschiedlicher teilaromatischer Polyester kommen ebenso in Betracht. Insbesondere sind unter teilaromatischen Polyestern Produkte wie Ecoflex^{®} (BASF Aktiengesellschaft) und Eastar^{®} Bio (Novamont) zu verstehen.

Zu den besonders bevorzugten teilaromatischen Polyestern zählen Polyester, die als wesentliche Komponenten
A) eine Säurekomponente aus
   a1) 30 bis 99 mol-% mindestens einer aliphatischen oder mindestens einer cycloaliphatischen Dicarbonsäure oder deren esterbildende Derivate oder Mischungen davon
   a2) 1 bis 70 mol-% mindestens einer aromatischen Dicarbonsäure oder deren esterbildendem Derivat oder Mischungen davon und
   a3) 0 bis 5 mol-% einer sulfonatgruppenhaltigen Verbindung,
B) eine Diolkomponente ausgewählt aus mindestens einem C₂-bis C₁₂-Alkandiol und mindestens einem C₅- bis C₁₀-Cycloalkandiol oder Mischungen davon
   und gewünschtenfalls darüber hinaus eine oder mehrere Komponenten ausgewählt aus
C) einer Komponente ausgewählt aus
   c1) mindestens einer Etherfunktionen enthaltenden Dihydroxyverbindung der Formel I

      HO-[(CH₂)ₙ-O]ₘ-H (I)

      in der n für 2, 3 oder 4 und m für eine ganze Zahl von 2 bis 250 stehen
   c2) mindestens einer Hydroxycarbonsäure oder Formel IIa oder lib 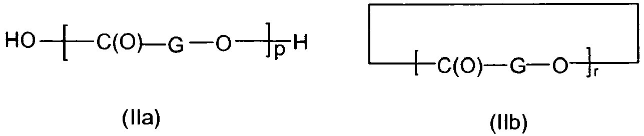 in der p eine ganze Zahl von 1 bis 1500 und r eine ganze Zahl von 1 bis 4 bedeuten, und G für einen Rest steht, der ausgewählt ist aus der Gruppe bestehend aus Phenylen, -(CH₂)_{q}-, wobei q eine ganze Zahl von 1 bis 5 bedeutet, -C(R)H- und -C(R)HCH₂, wobei R für Methyl oder Ethyl steht
   c3) mindestens einem Amino-C₂- bis C₁₂-alkanol oder mindestens einem Ami-no-C₅-bis C₁₀-cycloalkanol oder Mischungen davon
   c4) mindestens einem Diamino-C₁-bis C₈-Alkan
   c5) mindestens einem 2,2'-Bisoxazolins der allgemeinen Formel III 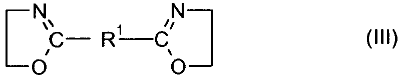 wobei R¹ eine Einfachbindung, eine (CH₂)_{z}-Alkylengruppe, mit z = 2, 3 oder 4, oder eine Phenylengruppe bedeutet
   c6) mindestens einer Aminocarbonsäure ausgewählt aus der Gruppe, bestehend aus den natürlichen Aminosäuren, Polyamiden, erhältlich durch Polykondensation einer Dicarbonsäure mit 4 bis 6 C-Atomen und einem Diamin mit 4 bis 10 C-Atomen, Verbindungen der Formeln IV a und Ivb 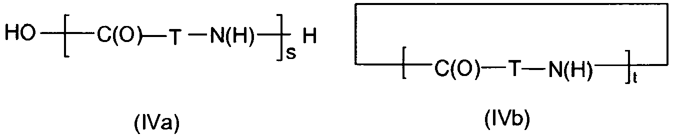 in der s eine ganze Zahl von 1 bis 1500 und t eine ganze Zahl von 1 bis 4 bedeuten, und T für einen Rest steht, der ausgewählt ist aus der Gruppe bestehend aus Phenylen, -(CH₂)ᵤ-, wobei u eine ganze Zahl von 1 bis 12 bedeutet, -C(R²)H- und -C(R²)HCH₂, wobei R² für Methyl oder Ethyl steht,
      und Polyoxazolinen mit der wiederkehrenden Einheit V 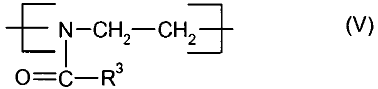 in der R³ für Wasserstoff, C₁-C₆-Alkyl, C₅-C₈-Cycloalkyl, unsubstituierten oder mit C₁-C₄-Alkylgruppen bis zu dreifach substituiertes Phenyl oder für Tetrahydrofuryl steht,
      oder Mischungen aus c1 bis c6
      und
D) einer Komponente ausgewählt aus
   d1) mindestens einer Verbindung mit mindestens drei zur Esterbildung befähigten Gruppen,
   d2) mindestens eines Isocyanates
   d3) mindestens eines Divinylethers
      oder Mischungen aus d1) bis d3) enthalten.

Die Säurekomponente A der teilaromatischen Polyester enthält in einer bevorzugten Ausführungsform von 30 bis 70, insbesondere von 40 bis 60 mol-% a1 und von 30 bis 70, insbesondere von 40 bis 60 mol-% a2.

Als aliphatische Säuren und die entsprechenden Derivate a1 kommen im Allgemeinen solche mit 2 bis 10 Kohlenstoffatomen, vorzugsweise 4 bis 6 Kohlenstoffatomen, in Betracht. Sie können sowohl linear als auch verzweigt sein. Die im Rahmen der vorliegenden Erfindung verwendbaren cycloaliphatischen Dicarbonsäuren sind in der Regel solche mit 7 bis 10 Kohlenstoffatomen und insbesondere solche mit 8 Kohlenstoffatomen. Prinzipiell können jedoch auch Dicarbonsäuren mit einer größeren Anzahl an Kohlenstoffatomen, beispielsweise mit bis zu 30 Kohlenstoffatomen, eingesetzt werden.

Beispielhaft zu nennen sind: Malonsäure, Bernsteinsäure, Glutarsäure, 2-Methylglutarsäure, 3-Methylglutarsäure, Adipinsäure, Pimelinsäure, Acelainsäure, Sebacinsäure, Fumarsäure, 2,2-Dimethylglutarsäure, Suberinsäure, 1,3-Cyclopentandicarbonsäure, 1,4-Cyclohexandicarbonsäure, 1,3-Cyclohexandicarbonsäure, Diglykolsäure, Itaconsäure, Maleinsäure und 2,5-Norbornandicarbonsäure.

Als esterbildende Derivate der oben genannten aliphatischen oder cycloaliphatischen Dicarbonsäuren, die ebenso verwendbar sind, sind insbesondere die Di-C₁- bis C₆-Alkylester, wie Dimethyl-, Diethyl-, Di-n-propyl, Di-isopropyl, Di-n-butyl, Di-iso-butyl, Dit-butyl, Di-n-pentyl-, Di-iso-pentyl oder Di-n-hexylester zu nennen. Anhydride der Dicarbonsäuren können ebenfalls eingesetzt werden.

Dabei können die Dicarbonsäuren oder deren esterbildenden Derivate, einzeln oder als Gemisch aus zwei oder mehr davon eingesetzt werden.

Bevorzugt werden Bernsteinsäure, Adipinsäure, Azelainsäure, Sebacinsäure, Brassylsäure oder deren jeweilige esterbildenden Derivate oder Mischungen davon eingesetzt. Besonders bevorzugt wird Bernsteinsäure, Adipinsäure oder Sebacinsäure oder deren jeweilige esterbildenden Derivate oder Mischungen davon eingesetzt. Besonders bevorzugt wird Adipinsäure oder deren esterbildende Derivate, wie deren Alkylester oder deren Mischungen eingesetzt. Als aliphatische Dicarbonsäure werden Sebacinsäure oder Mischungen von Sebacinsäure mit Adipinsäure bevorzugt eingesetzt, wenn Polymermischungen mit "harten" bzw. "spröden" Komponenten ii) wie beispielsweise Polyhydroxybutyrat oder insbesondere Polylactid hergestellt werden. Als aliphatische Dicarbonsäure werden Bernsteinsäure oder Mischungen von Bernsteinsäure mit Adipinsäure bevorzugt eingesetzt, wenn Polymermischungen mit "weichen" bzw. "zähen" Komponenten ii) wie beispielsweise Polyhydroxybutyratcovaleriat hergestellt werden.

Bernsteinsäure, Azelainsäure, Sebacinsäure und Brassylsäure haben zudem den Vorteil, dass sie als nachwachsende Rohstoffe zugänglich sind.

Als aromatische Dicarbonsäure a2 sind im Allgemeinen solche mit 8 bis 12 Kohlenstoffatomen und vorzugsweise solche mit 8 Kohlenstoffatomen zu nennen. Beispielhaft erwähnt seien Terephthalsäure, Isophthalsäure, 2,6-Naphthoesäure und 1,5-Naphthoesäure sowie esterbildende Derivate davon. Dabei sind insbesondere die Di-C₁-C₆-Alkylester, z.B. Dimethyl-, Diethyl-, Di-n-propyl-, Di-iso-propyl, Di-n-butyl-, Di-iso-butyl, Di-t-butyl, Di-n-pentyl-, Di-iso-pentyl oder Di-n-hexylester zu nennen. Die Anhydride der Dicarbonsäuren a2 sind ebenso geeignete esterbildende Derivate.

Prinzipiell können jedoch auch aromatische Dicarbonsäuren a2 mit einer größeren Anzahl an Kohlenstoffatomen, beispielsweise bis zu 20 Kohlenstoffatomen, eingesetzt werden.

Die aromatischen Dicarbonsäuren oder deren esterbildende Derivate a2 können einzeln oder als Gemisch aus zwei oder mehr davon eingesetzt werden. Besonders bevorzugt wird Terephthalsäure oder deren esterbildende Derivate wie Dimethylterephthalat verwendet.

Als sulfonatgruppenhaltige Verbindung setzt man üblicherweise ein Alkali- oder Erdalkalimetallsalz einer sulfonatgruppenhaltigen Dicarbonsäure oder deren esterbildende Derivate ein, bevorzugt Alkalimetallsalze der 5-Sulphoisophthalsäure oder deren Mischungen, besonders bevorzugt das Natriumsalz.

Nach einer der bevorzugten Ausführungsformen enthält die Säurekomponente A von 40 bis 60 mol-% a1, von 40 bis 60 mol-% a2 und von 0 bis 2 mol-% a3. Nach einer weiteren bevorzugten Ausführungsform enthält die Säurekomponente A von 40 bis 59,9 mol-% a1, von 40 bis 59,9 mol-% a2 und von 0,1 bis 1 mol-% a3, insbesondere von 40 bis 59,8 mol-% a1, von 40 bis 59,8 mol-% a2 und von 0,2 bis 0,5 mol-% a3.

Im Allgemeinen werden die Diole B unter verzweigten oder linearen Alkandiolen mit 2 bis 12 Kohlenstoffatomen, bevorzugt 4 bis 6 Kohlenstoffatomen, oder Cycloalkandiolen mit 5 bis 10 Kohlenstoffatomen ausgewählt.

Beispiele geeigneter Alkandiole sind Ethylenglykol, 1,2-Propandiol, 1,3-Propandiol, 1,2-Butandiol, 1,4-Butandiol, 1,5-Pentandiol, 2,4-Dimethyl-2-ethylhexan-1,3-diol, 2,2-Dimethyl- 1,3-propandiol, 2-Ethyl-2-butyl-1,3-propandiol, 2-Ethyl-2-isobutyl- 1,3-propandiol, 2,2,4-Trimethyl-1,6-hexandiol, insbesondere Ethylenglykol, 1,3-Propandiol, 1,4-Butandiol und 2,2-Dimethyl- 1,3-propandiol (Neopentylglykol); Cyclopentandiol, 1,4-Cyclohexandiol, 1,2-Cyclohexandimethanol, 1,3-Cyclohexandimethanol, 1,4-Cyclohexandimethanol oder 2,2,4,4-Tetramethyl-1,3-cyclobutandiol. Besonders bevorzugt sind 1,4-Butandiol, insbesondere in Kombination mit Adipinsäure als Komponente a1) und 1,3-Propandiol, insbesondere in Kombination mit Sebacinsäure als Komponente a1). 1,3-Propandiol hat zudem den Vorteil, dass es als nachwachsender Rohstoff zugänglich ist. Es können auch Mischungen unterschiedlicher Alkandiole verwendet werden.

Abhängig davon, ob ein Überschuss an Säure- oder OH-Endgruppen gewünscht wird, kann entweder die Komponente A oder die Komponente B im Überschuss eingesetzt werden. Nach einer bevorzugten Ausführungsform kann das Molverhältnis der eingesetzten Komponenten A zu B im Bereich von 0,4:1 bis 1,5:1, bevorzugt im Bereich von 0,6:1 bis 1,1:1 liegen.

Neben den Komponenten A und B können die Polyester, auf denen die erfindungsgemäßen Polyestermischungen basieren, weitere Komponenten enthalten.

Als Dihydroxyverbindungen c1 setzt man bevorzugt Diethylenglykol, Triethylenglykol, Polyethylenglykol, Polypropylenglykol und Polytetrahydrofuran (Poly-THF), besonders bevorzugt Diethylenglykol, Triethylenglykol und Polyethylenglykol, ein, wobei man auch Mischungen davon oder Verbindungen, die unterschiedliche Variablen n aufweisen (siehe Formel I), beispielsweise Polyethylenglykol, das Propyleneinheiten (n = 3) enthält, beispielsweise erhältlich durch Polymerisation nach an sich bekannten Methoden von zuerst Ethylenoxid und anschließend mit Propylenoxid, besonders bevorzugt ein Polymer auf Basis von Polyethylenglykol, mit unterschiedlichen Variablen n, wobei Einheiten gebildet aus Ethylenoxid überwiegen. Das Molekulargewicht (Mₙ) des Polyethylenglykols wählt man in der Regel im Bereich von 250 bis 8000, bevorzugt von 600 bis 3000 g/mol.

Nach einer der bevorzugten Ausführungsformen können beispielsweise von 15 bis 98, bevorzugt 60 bis 99,5 mol-% der Diole B und 0,2 bis 85, bevorzugt 0,5 bis 30 mol-% der Dihydroxyverbindungen c1, bezogen auf die molare Menge von B und c1, für die Herstellung der teilaromatischen Polyester verwendet werden.

In einer bevorzugten Ausführungsform setzt man als Hydroxycarbonsäure c2) ein: Glykolsäure, D-, L-, D,L-Milchsäure, 6-Hydroxyhexansäure, deren cyclische Derivate wie Glycolid (1,4-Dioxan-2,5-dion), D-, L-Dilactid (3,6-dimethyl-1,4- dioxan-2,5-dion), p-Hydroxybenzoesäure sowie deren Oligomere und Polymere wie 3-Polyhydroxybuttersäure, Polyhydroxyvaleriansäure, Polylactid (beispielsweise als EcoPLA^{®} 2000D (Fa. Cargill) erhältlich) sowie eine Mischung aus 3-Polyhydroxybuttersäure und Polyhydroxy-valeriansäure (letzteres ist unter dem Namen Biopol^{®} von Zeneca erhältlich), besonders bevorzugt für die Herstellung von teilaromatischen Polyestern sind die niedermolekularen und cyclischen Derivate davon.

Die Hydroxycarbonsäuren können beispielsweise in Mengen von 0,01 bis 50, bevorzugt von 0,1 bis 40 Gew.-% bezogen auf die Menge an A und B verwendet werden.

Als Amino-C₂-C₁₂-alkanol oder Amino-C₅-C₁₀-cyloalkanol (Komponente c3), wobei hierunter auch 4-Aminomethylcyclohexanmethanol fallen soll, setzt man bevorzugt Amino-C₂-C₆-alkanole wie 2-Aminoethanol, 3-Aminopropanol, 4-Aminobutanol, 5-Aminopentanol, 6-Aminohexanol sowie Amino-C₅-C₆-cyloalkanole wie Aminocyclopentanol und Aminocyclohexanol oder Mischungen davon ein.

Als Diamino-C₁-C₈-alkan (Komponente c4) setzt man bevorzugt Diamino-C₄-C₆-alkane ein wie 1,4-Diminobutan, 1,5-Diaminopentan und 1,6-Diaminohexan (Hexamethylendiamin, "HMD").

Nach einer bevorzugten Ausführungsform kann von 0,5 bis 99,5 mol-%, bevorzugt 0,5 bis 50 mol-%, c3, bezogen auf die Molmenge von B, und von 0 bis 50, bevorzugt von 0 bis 35 mol-%, c4, bezogen auf die Molmenge von B, für die Herstellung der teilaromatischen Polyester eingesetzt werden.

Die 2,2'-Bisoxazoline c5 der allgemeinen Formel III sind im Allgemeinen erhältlich durch das Verfahren aus Angew. Chem. Int. Edit., Vol. 11 (1972), S. 287-288. Besonders bevorzugte Bisoxazoline sind solche, in denen R¹ eine Einfachbindung, eine (CH₂)_{z}-Alkylengruppe, mit z = 2,3 oder 4 wie Methylen, Ethan-1,2-diyl, Propan-1,3-diyl, Propan-1,2-diyl, oder eine Phenylengruppe bedeutet. Als besonders bevorzugte Bisoxazoline seien 2,2'-Bis(2-oxazolin), Bis(2-oxazolinyl)methan, 1,2-Bis(2-oxazolinyl)ethan, 1,3-Bis(2-oxazolinyl)propan oder 1,4-Bis(2-oxazolinyl)butan, insbesondere 1,4-Bis(2-oxazolinyl)benzol, 1,2-Bis(2-oxazolinyl)benzol oder 1,3-Bis(2-oxazolinyl)benzol genannt.

Zur Herstellung der teilaromatischen Polyester können beispielsweise von 70 bis 98 mol-% B, bis 30 mol-% c3 und 0,5 bis 30 mol-% c4 und 0,5 bis 30 mol-% c5, jeweils bezogen auf die Summe der Molmengen der Komponenten B, c3, c4 und c5, verwendet werden. Nach einer anderen bevorzugten Ausführungsform ist es möglich, von 0,1 bis 5, bevorzugt 0,2 bis 4 Gew.-% c5, bezogen auf das Gesamtgewicht von A und B, einzusetzen.

Als Komponente c6 können natürliche Aminocarbonsäuren verwendet werden. Zu diesen zählen Valin, Leucin, Isoleucin, Threonin, Methionin, Phenylalanin, Tryptophan, Lysin, Alanin, Arginin, Aspartamsäure, Cystein, Glutaminsäure, Glycin, Histidin, Prolin, Serin, Tryosin, Asparagin oder Glutamin.

Bevorzugte Aminocarbonsäuren der allgemeinen Formeln IVa und IVb sind die, worin s eine ganze Zahl von 1 bis 1000 und t eine ganze Zahl von 1 bis 4, bevorzugt 1 oder 2 bedeuten und T ausgewählt ist aus der Gruppe Phenylen und -(CH₂)ᵤ-, wobei u 1, 5 oder 12 bedeutet.

Ferner kann c6 auch ein Polyoxazolin der allgemeinen Formel V sein. C6 kann aber auch eine Mischung unterschiedlicher Aminocarbonsäuren und/oder Polyoxazoline sein.

Nach einer bevorzugten Ausführungsform kann c6 in Mengen von 0,01 bis 50, bevorzugt von 0,1 bis 40 Gew.-%, bezogen auf die Gesamtmenge der Komponenten A und B, eingesetzt werden.

Als weitere Komponenten, die optional zur Herstellung der teilaromatischen Polyester eingesetzt werden können, zählen Verbindungen d1, die mindestens drei zur Esterbildung befähigte Gruppen enthalten.

Die Verbindungen d1 enthalten bevorzugt drei bis zehn funktionelle Gruppen, welche zur Ausbildung von Esterbindungen fähig sind. Besonders bevorzugte Verbindungen d1 haben drei bis sechs funktionelle Gruppen dieser Art im Molekül, insbesondere drei bis sechs Hydroxylgruppen und/oder Carboxylgruppen. Beispielhaft seien genannt:
Weinsäure, Zitronensäure, Äpfelsäure;
Trimethylolpropan, Trimethylolethan;
Pentaerythrit;
Polyethertriole;
Glycerin;
Trimesinsäure;
Trimellitsäure, -anhydrid;
Pyromellitsäure, -dianhydrid und
Hydroxyisophthalsäure.

Die Verbindungen d1 werden in der Regel in Mengen von 0,01 bis 15, bevorzugt 0,05 bis 10, besonders bevorzugt 0,1 bis 4 mol-%, bezogen auf die Komponente A eingesetzt.

Als Komponente d2 werden ein oder eine Mischung unterschiedlicher Isocyanate eingesetzt. Es können aromatische oder aliphatische Diisocyanate eingesetzt werden. Es können aber auch höher funktionelle Isocyanate verwendet werden.

Unter einem aromatischen Diisocyanat d2 werden im Rahmen der vorliegenden Erfindung vor allem

Toluylen-2,4-diisocyanat, Toluylen-2,6-diisocyanat, 2,2'-Diphenylmethandiisocyanat, 2,4'-Diphenylmethandiisocyanat, 4,4'-Diphenylmethandiisocyanat, Naphthylen-1,5-diisocyanat oder Xylylen-diisocyanat verstanden.

Darunter werden 2,2'-, 2,4'- sowie 4,4'-Diphenylmethandiisocyanat als Komponente d2 besonders bevorzugt. Im Allgemeinen werden letztere Diisocyanate als Mischung eingesetzt.

Als dreikerniges Isocyanat d2 kommt auch Tri(4-isocyanophenyl)methan in Betracht. Die mehrkernigen aromatischen Diisocyanate fallen beispielsweise bei der Herstellung von ein- oder zweikernigen Diisocyanaten an.

In untergeordneten Mengen, z.B. bis zu 5 Gew.-%, bezogen auf das Gesamtgewicht der Komponente d2, kann die Komponente d2 auch Urethiongruppen, beispielsweise zum Verkappen der Isocyanatgruppen, enthalten.

Unter einem aliphatischen Diisocyanat d2 werden im Rahmen der vorliegenden Erfindung vor allem lineare oder verzweigte Alkylendiisocyanate oder Cycloalkylendiisocyanate mit 2 bis 20 Kohlenstoffatomen, bevorzugt 3 bis 12 Kohlenstoffatomen, z.B. 1,6-Hexamethylendiisocyanat, Isophorondiisocyanat oder Methylen-bis(4-isocyanatocyclohexan), verstanden. Besonders bevorzugte aliphatische Diisocyanate d2 sind 1,6-Hexamethylendiisocyanat und Isophorondiisocyanat.

Zu den bevorzugten Isocyanuraten zählen die aliphatischen Isocyanurate, die sich von Alkylendiisocyanaten oder Cycloalkylendiisocyanaten mit 2 bis 20 Kohlenstoffatomen, bevorzugt 3 bis 12 Kohlenstoffatomen, z.B. Isophorondiisocyanat oder Methylen-bis(4-isocyanatocyclohexan), ableiten. Dabei können die Alkylendiisocyanate sowohl linear als auch verzweigt sein. Besonders bevorzugt werden Isocyanurate, die auf n-Hexamethylendiisocyanat basieren, beispielsweise cyclische Trimere, Pentamere oder höhere Oligomere des n-Hexamethylendiisocyanats.

Im Allgemeinen wird die Komponente d2 in Mengen von 0,01 bis 5, bevorzugt 0,05 bis 4 mol-%, besonders bevorzugt 0,1 bis 4 mol-% bezogen auf die Summe der Molmengen von A und B verwendet.

Als Divinylether d3 kann man im Allgemeinen alle üblichen und kommerziell erhältlichen Divinylether einsetzen. Bevorzugt verwendet werden 1,4-Butandiol-divinylether, 1,6-Hexandiol-divinylether oder 1,4-Cyclohexandimethanol-divinylether oder Mischungen davon.

Bevorzugt werden die Divinylether in Mengen von 0,01 bis 5, insbesondere von 0,2 bis 4 Gew.-%, bezogen auf das Gesamtgewicht von A und B, eingesetzt.

Beispiele bevorzugter teilaromatischer Polyester basieren auf den folgenden Komponenten
A, B, d1
A, B, d2
A, B, d1, d2
A, B, d3
A, B, c1
A, B, c1, d3
A, B, c3, c4
A, B, c3, c4, c5
A, B, d 1, c3, c5
A, B, c3, d3
A, B, c3, d1
A, B, c1, c3, d3
A, B, c2

Darunter sind teilaromatische Polyester, die auf A, B, d1 oder A, B, d2 oder auf A, B, d1, d2 basieren, besonders bevorzugt. Nach einer anderen bevorzugten Ausführungsform basieren die teilaromatischen Polyester auf A, B, c3, c4, c5 oder A, B, d1, c3, c5.

Die genannten teilaromatischen Polyester und die erfindungsgemäßen Polyestermischungen sind in der Regel biologisch abbaubar.

Im Sinne der vorliegenden Erfindung ist das Merkmal "biologisch abbaubar" für einen Stoff oder ein Stoffgemisch dann erfüllt, wenn dieser Stoff oder das Stoffgemisch in mindestens einem der drei in DIN V 54900-2 (Vornorm, Stand September 1998) definierten Verfahren einen prozentualen Grad des biologischen Abbaus von mindestens 60 % aufweist.

Im Allgemeinen führt die biologische Abbaubarkeit dazu, daß die Polyester(mischungen) in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise wird gemäß DIN EN 13432 oder DIN V 54900-2, Verfahren 3, CO₂-freie Luft durch gereiften Kompost während des Kompostierens strömen gelassen und dieser einem definierten Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂-Freisetzung der Probe (berechnet aus dem Kohlenstoffgehalt der Probe) als prozentualer Grad des biologischen Abbaus definiert. Biologisch abbaubare Polyester(mischungen) zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400 beschrieben.

Die Herstellung der teilaromatischen Polyester ist an sich bekannt oder kann nach an sich bekannten Methoden erfolgen.

Die bevorzugten teilaromatischen Polyester sind charakterisiert durch ein Molekulargewicht (Mₙ) im Bereich von 1000 bis 100000, insbesondere im Bereich von 9000 bis 75000 g/mol, bevorzugt im Bereich von 10000 bis 50000 g/mol und einem Schmelzpunkt im Bereich von 60 bis 170, bevorzugt im Bereich von 80 bis 150 °C.

Die genannten teilaromatischen Polyester können Hydroxy- und/oder Carboxylendgruppen in jedem beliebigen Verhältnis aufweisen. Die genannten teilaromatischen Polyester können auch endgruppenmodifiziert werden. So können beispielsweise OH-Endgruppen durch Umsetzung mit Phthalsäure, Phthalsäureanhydrid, Trimellithsäure, Trimellithsäureanhydrid, Pyromellithsäure oder Pyromellithsäureanhydrid säuremodifiziert werden.

Grundsätzlich sind als Komponenten ii der biologisch abbaubaren Polyestermischungen Homo- oder Copolyester ausgewählt aus der Gruppe bestehend aus Polylactid, Polycaprolacton, Polyhydroxyalkanoate und Polyester aus aliphatischen Dicarbonsäuren und aliphatischen Diolen, geeignet. Bevorzugte Komponenten ii sind Polylactid (PLA) und Polyhydroxyalkanoate, und hier insbesondere Polyhydroxybutyrat (PHB) Polyhydroxybutyrate covaleriat (PHBV). Insbesondere sind Produkte wie Nature-Works® (Polylaktid der Fa. Cargill Dow), Biocycle® (Polyhydroxybutyrat der Fa. PHB Ind.); Enmat® (Polyhydroxybutyrate covaleriat der Fa. Tianan) umfasst.

Die erfindungsgemäße Komponente iii umfasst a) eines Epoxidgruppen-haltigen Copolymers auf Basis Styrol, Acrylsäureester und/oder Methacrylsäureester, b) eines Bisphenol-A-Epoxids oder c) eines Epoxidgruppen-haltigen natürlichen Öls, Fettsäureesters oder Fettsäureamids.

Vorzugsweise wird eines Epoxidgruppen-haltigen Copolymers auf Basis Styrol, Acrylsäureester und/oder Methacrylsäureester eingesetzt. In der Regel weisen die Verbindungen zwei oder mehr Epoxidgruppen im Molekül auf. Insbesondere geeignet sind oligomere oder polymere epoxidierte Verbindungen, beispielsweise Di- oder Polyglycidester von Di- oder Polycarbonsäuren oder Di- oder Polyglycidether von Di- oder Polyolen, oder Copolymere aus Styrol und Glycidyl(meth)acrylaten, wie sie beispielsweise von Fa. Johnson Polymer unter der Marke Joncryl^{®} ADR 4368 vertrieben werden.

Weitere bevorzugte Komponenten iii sind Verbindungen, die mindestens eine Kohlenstoff-Kohlenstoff-Doppel- oder -Dreifachbindung und mindestens eine Epoxidgruppe im Molekül enthalten. Insbesondere geeignet sind Glycidylacrylat und Glycidylmethacrylat.

Weiterhin werden als Komponente iii) c) Epoxidgruppen-haltige (epoxidierte) natürliche Öle oder Fettsäureester bevorzugt. Unter natürlichen Ölen werden beispielsweise Olivenöl, Leinöl, Sojabohnenöl, Palmöl, Erdnussöl, Kokosnussöl, Tangöl, Lebertran oder eine Mischung von diesen Verbindungen verstanden. Insbesondere bevorzugt sind epoxidiertes Sojabohnenöl (z.B. Merginat^{®} ESBO von Hobum, Hamburg, oder Edenol^{®} B 316 von Cognis, Düsseldorf). Insbesondere bevorzugt werden als Komponente iii) die Strukturtypen a) und c) kombiniert. Wie in den Beispielen näher ausgeführt ist insbesondere die Kombination von Joncryl^{®} ADR 4368 (Strukturtyp a)) und Merginat^{®} ESBO (Strukturtyp c) bevorzugt.

Komponente iii) wird in 0,1 bis 15 Gew.-%, bevorzugt in 0,1 bis 10 Gew.-%, und besonders bevorzugt in 0,5 bis 2 Gew.-%, bezogen auf das Gesamtgewicht der Komponenten i) bis ii), eingesetzt, sofern Mischungen erfolgen sollen.

Die biologisch abbaubaren Polyestermischungen enthalten üblicherweise von 5 bis 90 Gew.-%, bevorzugt von 10 bis 85 Gew.-%, besonders bevorzugt von 15 bis 80 Gew.%, insbesondere von 40 bis 60 Gew.-% Komponente i und von 10 bis 95 Gew.-%, bevorzugt von 15 bis 80 Gew.-%, besonders bevorzugt von 40 bis 80 Gew.-%, ganz besonders bevorzugt von 40 bis 60 Gew.-% Komponente ii, wobei sich die Gewichtsprozente jeweils auf das Gesamtgewicht der Komponenten i bis ii beziehen und zusammen 100 Gew.-% ergeben.

Für die Herstellung von Formteilen für beispielsweise den Spritzguss können Polyestermischungen mit hohem Polyhydroxybutyrat (PHB)- oder insbesondere Polylactid (PLA)-Anteil (Komponente ii) eingesetzt werden. Üblicherweise sind hier Mischungen von 60 bis 95 Gew.-% Komponente realisierbar. Ein verbessertes Verfahren zur Herstellung von schlagzähen Formmassen wird bei den Herstellverfahren beschrieben.

Setzt man als Komponente i) Polyester ein, die als Dicarbonsäure (Komponente a1)) Sebacinsäure oder Mischungen von Sebacinsäure mit Adipinsäure enthalten, so kann der Anteil des Polyesters in den Mischungen mit Komponente ii) sogar noch unter die 10 Gew.-% Grenze gesenkt werden.

Die biologisch abbaubaren Polyestermischungen enthalten darüber hinaus üblicherweise von 0,1 bis 15 Gew.-%, bevorzugt von 0,5 bis 10 Gew.-%, besonders bevorzugt von 1 bis 5 Gew.-% Komponente iii, wobei die Gewichtsprozente jeweils auf das Gesamtgewicht der Komponenten i bis ii bezogen sind.

Die biologisch abbaubaren Polyestermischungen können weitere dem Fachmann bekannte, aber nicht erfindungswesentliche Inhaltsstoffe enthalten. Beispielsweise die in der Kunststofftechnik üblichen Zusatzstoffe wie Stabilisatoren, Neutralisationsmittel, Gleit- und Trennmittel, Antiblockmittel, Farbstoffe oder Füllstoffe. Darüber hinaus enthalten diese natürlich metallorganisches Gerüstmaterial als Zusatzstoff.

Die Herstellung der erfindungsgemäßen biologisch abbaubaren Polyestermischungen aus den einzelnen Komponenten kann nach bekannten Verfahren erfolgen (EP 792 309 und US 5,883,199).

Beispielsweise können alle Komponenten i, ii und iii in einem Verfahrensschritt in dem Fachmann bekannten Mischvorrichtungen, beispielsweise Knetern oder Extrudern bei erhöhten Temperaturen, beispielsweise von 120 °C bis 250 °C, gemischt und zur Reaktion gebracht werden. Die Reaktion wird bevorzugt in Gegenwart eines Radikalstarters durchgeführt.

Ein beispielhaftes Verfahren zur Herstellung der biologisch abbaubaren Polyestermischungen kann folgende Schritte umfassen.

Hierzu wird in einem ersten Schritt 1 bis 50 Gew.-%, bevorzugt 5 bis 35 Gew.-% Komponente iii mit 50 bis 99 Gew.-% und bevorzugt 65 bis 95 Gew.-% Komponente i bei Temperaturen von 110 bis 145 °C - vorzugsweise 120 bis 140 °C - zu einem Verzweigerbatch gemischt. Bei diesen Temperaturen wird ein homogener Blend erhalten, ohne dass es zu einem nennenswerten Molekulargewichtsaufbau käme. Der so erhaltene Verzweigerbatch lässt sich bei Raumtemperatur problemlos aufbewahren. In einem zweiten Schritt kann durch Zugabe des Verzweigerbatches zu Komponente ii und gegebenenfalls weiterer Komponente i die gewünschte Zusammensetzung eingestellt werden. Dieser Compoundierungsschritt wird bei 150 bis 250 °C - vorzugsweise bei 160 bis 190 °C - durchgeführt.

Die Temperaturen im Compoundierungsschritt lassen sich in der Regel senken und damit Zersetzungen empfindlicher Biopolymere wie Polyhydroxybutyrate vermeiden, indem ein Aktivator ausgewählt aus der Gruppe bestehend aus: Zink, Zinn, Titanverbindung und C₁-C₁₂-Alkyltriphenylphosphonium-halogenid eingesetzt wird.

Typische Verzweigerbatches enthalten 5 bis 35 Gew.-%, vorzugsweise 10 bis 20 Gew.-% Komponente iii) und 65 bis 95 Gew.-%, vorzugsweise 80 bis 90 Gew.-% Komponente i. Überraschenderweise haben sich diese Verzweigerbatches als vorteilhaft gegenüber entsprechenden Verzweigerbatches bestehend aus den Komponente ii) und iii) erwiesen. Die Verzweigerbatches sind Gegenstand der vorliegenden Erfindung. Aus den weiter unten aufgeführten Beispielen 4 bis 6 wird deutlich, dass die erfindungsgemäßen Verzweigerbatches aus den Komponenten i) und iii) gegenüber den zum Teil käuflich erhältlichen Verzweigerbatches (z.B. Polylactid und Glycidylmethacrylat) Vorteile hinsichtlich der Fließrate der gebildeten Polyestermischungen aufweisen. Zudem zeichnen sich die erfindungsgemäßen Verzweigerbatches durch eine hervorragende Lagerstabilität aus.

Beispiele für erfindungsgemäße Verzweigerbatches sind:
Komponente i), Polyester hergestellt durch Kondensation von:
   - Adipinsäure/Terephthalsäure und 1,4-Butandiol (z. B. Ecoflex^{®} FBX 7011);
   - Adipinsäure/Terephthalsäure und 1,3-Propandiol;
   - Bernsteinsäure/Terephthalsäure und 1,4-Butandiol;
   - Bernsteinsäure /Terephthalsäure und 1,3-Propandiol;
   - Sebacinsäure/Terephthalsäure und 1,4-Butandiol;
   - Sebacinsäure/Terephthalsäure und 1,3-Propandiol
   - Azelainsäure/Terephthalsäure und 1,4-Butandiol;
   - Brassylsäure/Terephthalsäure und 1,4-Butandiol; und
Komponente iii): Glycidylmethacrylat (z.B. Joncryl^{®} ADR 4368 der Fa. Johnson Polymer).

Zur Herstellung von Polyestermischungen mit einem hohen Anteil an "harter" bzw. "spröder" Komponente ii) wie beispielsweise >50 Gew.-% Polyhydroxybutyrat oder insbesondere Polylactid hat sich folgende Fahrweise als besonders vorteilhaft herausgestellt. Es wird wie zuvor beschrieben entweder durch Mischen der Komponenten i), ii) und iii) oder in zwei Schritten durch Mischen eines der oben erwähnten Verzweigerbatches mit Komponente ii) und gegebenenfalls weiterer Komponente i) ein Zwischencompound hergestellt, der vorzugsweise 48 bis 60 Gew.-% Komponente i), 40 bis 50 Gew.-% Komponente ii) und 0,5 bis 2 Gew.-% Komponente iii) enthält. In einem zusätzlichen Schritt wird nun dieser Zwischencompound mit weiterer Komponente ii) versetzt bis der gewünschte Gehalt an Komponente ii) in der Polyestermischung eingestellt ist. Die nach diesem dreistufigen Verfahren hergestellte Polyestermischung eignet sich hervorragend zur Herstellung von biologisch abbaubaren, schlagzähen Polyestermischungen.

Als aliphatische Dicarbonsäure werden Sebacinsäure oder Mischungen von Sebacinsäure mit Adipinsäure bevorzugt eingesetzt, wenn Polymermischungen mit hohem Anteil an "harten" bzw. "spröden" Komponenten ii) wie beispielsweise Polyhydroxybutyrat oder insbesondere Polylactid hergestellt werden.

Aufgrund der Erfahrungen mit anderen Compounds (e.g. Entwicklung von Ecoflex / Stärke-Compounds) wurde der Lösungsansatz - die Verwendung eines Kompatibilizers
- variiert. Statt ihn teuer in die gesamte Matrix einzuarbeiten wird nur ein Teil der Ecoflex / PLA-Formulierung mit einem Kompatibilizer-Konzentrat ausgerüstet. Beispiele für einen so genannten Kompatibilizer-Batch sind die oben bereits erwähnten Verzweigerbatches und Zwischencompounds. Damit werden Kompoundierkosten eingespart:
   - 9,5-89,5 Gew.-% Ecoflex, 89,5-9,5 Gew.-% PLA, 0,5-20 Gew.-% Kompatibilizer-Batch, 0-15 Gew.-% Additive (wie z.B. Palmitate, Laurate, Stearate, PEG) und 0 bis 50 Gew.-% Füllstoffe (Kreide, Talkum, Kaolin, Silica etc.)
   - 29,5-59,5 Gew.-% Ecoflex, 59,5-29,5 Gew.-% P LA, 0,5-20 Gew.-% Kompatibilizer-Batch, 0-15 Gew.-% Additive (wie z.B. Palmitate, Laurate, Stearate, PEG) und 0 bis 50 Gew.-% Füllstoffe (Kreide, Talkum, Kaolin, Silica)

Die biologisch abbaubaren Polyestermischungen sind besonders zur Herstellung von, Formteilen, Folien oder Fasern geeignet. Die Herstellung kann nach dem Fachmann bekannten Methoden erfolgen.

Mit Hilfe der biologisch abbaubaren Polyestermischungen werden biologisch abbaubare Polymermischungen erhalten, die sich problemlos (blasenstabil) zu durchstoßfesten Folien verarbeiten lassen.

Als Additiv enthält das biologisch abbaubare Material mindestens ein poröses metallorganisches Gerüstmaterial. Dies kann nach üblichen Verfahren während des Herstellprozesses des biologisch abbaubaren Materials zu Folien oder Filmen eingebracht werden.

Solche metallorganischen Gerüstmaterialien (MOF) sind im Stand der Technik bekannt und werden beispielsweise beschrieben in US 5,648,508, EP-A-0 790 253, M. O'Keeffe et al., J. Sol. State Chem., 152 (2000), Seite 3 bis 20, H. Li et al., Nature 402, (1999), Seite 276, M. Eddaoudi et al., Topics in Catalysis 9, (1999), Seite 105 bis 111, B. Chen et al., Science 291, (2001), Seite 1021 bis 1023, DE-A-101 11 230, DE-A 10 2005 053430, WO-A 2007/054581, WO-A 2005/049892 und WO-A 2007/023134.

Als eine spezielle Gruppe dieser metallorganischen Gerüstmaterialien werden in der jüngsten Literatur so genannte "beschränkte" Gerüstmaterialien beschrieben, bei denen das Gerüst durch spezielle Wahl der organischen Verbindung sich nicht unendlich sondern unter Ausbildung von Polyedern erstreckt. A.C. Sudik, et al., J. Am. Chem. Soc. 127 (2005), 7110-7118, beschreiben solche speziellen Gerüstmaterialien. Hierbei werden diese zur Abgrenzung als metallorganische Polyeder (MOP = Metal-Organic Polyhedra) bezeichnet.

Eine weitere spezielle Gruppe von porösen metallorganischen Gerüstmaterialien sind solche, bei denen die organische Verbindung als Ligand ein mono-, bi- oder polycyclisches Ringsystem darstellt, das sich zumindest von einem der Heterocyclen ausgewählt aus der Gruppe bestehend aus Pyrrol, alpha-Pyridon und gamma-Pyridon ableitet und mindestens zwei Stickstoff-Ringatome aufweist. Die elektrochemische Herstellung solcher Gerüstmaterialien ist in WO-A 2007/131955 beschrieben.

Die generelle Eignung metallorganischer Gerüstmaterialien zur Aufnahme von Gasen und Flüssigkeiten ist beispielsweise in WO-A 2005/003622 und EP-A 1 702 925 beschrieben.

Insbesondere diese speziellen Gruppen sind im Rahmen der vorliegenden Erfindung geeignet.

Die metallorganischen Gerüstmaterialien gemäß der vorliegenden Erfindung enthalten Poren, insbesondere Mikro- und/oder Mesoporen. Mikroporen sind definiert als solche mit einem Durchmesser von 2 nm oder kleiner und Mesoporen sind definiert durch einen Durchmesser im Bereich von 2 bis 50 nm, jeweils entsprechend nach der Definition, wie sie Pure & Applied Chem. 57 (1983), 603 - 619, insbesondere auf Seite 606 angegeben ist. Die Anwesenheit von Mikro- und/oder Mesoporen kann mit Hilfe von Sorptionsmessungen überprüft werden, wobei diese Messungen die Aufnahmekapazität der MOF für Stickstoff bei 77 Kelvin gemäß DIN 66131 und/oder DIN 66134 bestimmt.

Vorzugsweise beträgt die spezifische Oberfläche - berechnet nach dem Langmuir-Modell (DIN 66131, 66134) für ein MOF in Pulverform mehr als 100 m²/g, mehr bevorzugt über 300 m²/g, mehr bevorzugt mehr als 700 m²/g, weiter mehr bevorzugt mehr als 800 m²/g, weiter mehr bevorzugt mehr als 1000 m²/g und besonders bevorzugt mehr als 1200 m²/g.

Formkörper enthaltend metallorganische Gerüstmaterialien können eine niedrigere aktive Oberfläche besitzen; vorzugsweise jedoch mehr als 150 m²/g, mehr bevorzugt mehr als 300 m²/g, weiter mehr bevorzugt mehr als 700 m²/g.

Die Metallkomponente im Gerüstmaterial nach der vorliegenden Erfindung ist vorzugsweise ausgewählt aus den Gruppen la, IIa, IIIa, IVa bis VIIIa und Ib bis VIb. Besonders bevorzugt sind Mg, Ca, Sr, Ba, Sc, Y, Ln, Ti, Zr, Hf, V, Nb, Ta, Cr, Mo, W, Mn, Re, Fe, Ro, Os, Co, Rh, Ir, Ni, Pd, Pt, Cu, Ag, Au, Zn, Cd, Hg, Al, Ga, In, TI, Si, Ge, Sn, Pb, As, Sb und Bi, wobei Ln für Lanthanide steht.

Lanthanide sind La, Ce, Pr, Nd, Pm, Sm, En, Gd, Tb, Dy, Ho, Er, Tm, Yb.

In Bezug auf die Ionen dieser Elemente sind besonders zu erwähnen Mg²⁺, Ca²⁺, Sr²⁺, Ba²⁺, Sc³⁺, Y³⁺, Ln³⁺, Ti⁴⁺, Zr⁴⁺, Hf⁴⁺, V⁴⁺, V³⁺, V²⁺, Nb³⁺, Ta³⁺, Cr³⁺, Mo³⁺, W³⁺, Mn³⁺, Mn²⁺, Re³⁺, Re²⁺, Fe³⁺, Fe²⁺, Ru³⁺, Ru²⁺, Os³⁺, Os²⁺, Co³⁺, Co²⁺, Rh²⁺, Rh⁺, Ir²⁺, Ir⁺, Ni²⁺, Ni⁺, Pd²⁺, Pd⁺, Pt²⁺, Pt⁺, Cu²⁺, Cu⁺, Ag, Au⁺, Zn²⁺, Cd²⁺, Hg²⁺, Al³⁺, Ga³⁺, In³⁺, TI³⁺, Si⁴⁺, Si²⁺, Ge⁴⁺, Ge²⁺, Sn⁴⁺, Sn²⁺, Pb⁴⁺, Pb²⁺, As⁵⁺, As³⁺, As⁺, Sb⁵⁺, Sb³⁺, Sb⁺, Bi⁵⁺ , Bi³⁺ und Bi⁺.

Weiterhin besonders bevorzugt sind Mg, Al, Y, Sc, Zr, Ti, V, Cr, Mo, Fe, Co, Cu, Ni, Zn, Ln. Weiter bevorzugt sind Al, Mo, Y, Sc, Mg, Fe, Cu und Zn. Insbesondere sind Sc, Al, Cu und Zn bevorzugt. Besonders bevorzugt ist Cu.

Aufgrund des Einsatzes biologisch abbaubarer Folien oder Filme ist es besonders bevorzugt, wenn die eingesetzten Metalle des metallorganischen Gerüstmaterials ebenfalls biologisch unbedenklich sind. Hierbei sind insbesondere Mg, Ca und Al zu nennen.

Der Begriff "mindestens zweizähnige organische Verbindung" bezeichnet eine organische Verbindung, die mindestens eine funktionelle Gruppe enthält, die in der Lage ist, zu einem gegebenen Metallion mindestens zwei koordinative Bindungen, und/oder zu zwei oder mehr, bevorzugt zwei Metallatomen jeweils eine koordinative Bindung auszubilden.

Als funktionelle Gruppen, über die die genannten koordinativen Bindungen ausgebildet werden kann, sind insbesondere beispielsweise folgende funktionellen Gruppen zu nennen: -CO₂H, -CS₂H, -NO₂, -B(OH)₂, -SO₃H, -Si(OH)₃, -Ge(OH)₃, -Sn(OH)₃, -Si(SH)₄, -Ge(SH)₄, -Sn(SH)₃, -PO₃H, -AsO₃H, -AsO₄H, -P(SH)₃, -As(SH)₃, -CH(RSH)₂, -C(RSH)₃ -CH(RNH₂)₂ -C(RNH₂)₃, -CH(ROH)₂, -C(ROH)₃, -CH(RCN)₂, -C(RCN)₃ wobei R beispielsweise bevorzugt eine Alkylengruppe mit 1, 2, 3, 4 oder 5 Kohlenstoffatomen wie beispielsweise eine Methylen-, Ethylen-, n-Propylen-, i-Propylen, n-Butylen-, i-Butylen-, tert-Butylen- oder n-Pentylengruppe, oder eine Arylgruppe, enthaltend 1 oder 2 aromatische Kerne wie beispielsweise 2 C₆-Ringe, die gegebenenfalls kondensiert sein können und unabhängig voneinander mit mindestes jeweils einem Substituenten geeignet substituiert sein können, und/oder die unabhängig voneinander jeweils mindestens ein Heteroatom wie beispielsweise N, O und/oder S enthalten können. Gemäß ebenfalls bevorzugten Ausführungsformen sind funktionelle Gruppen zu nennen, bei denen der oben genannte Rest R nicht vorhanden ist. Diesbezüglich sind unter anderem -CH(SH)₂, -C(SH)₃, -CH(NH₂)₂, -C(NH₂)₃, -CH(OH)₂, -C(OH)₃, -CH(CN)₂ oder -C(CN)₃zu nennen.

Die funktionellen Gruppen können jedoch auch Heteroatome eines Heterocyclus sein. Insbesondere sind hierbei Stickstoffatome zu nennen.

Die mindestens zwei funktionellen Gruppen können grundsätzlich an jede geeignete organische Verbindung gebunden sein, solange gewährleistet ist, dass die diese funktionellen Gruppen aufweisende organische Verbindung zur Ausbildung der koordinativen Bindung und zur Herstellung des Gerüstmaterials befähigt ist.

Bevorzugt leiten sich die organischen Verbindungen, die die mindestens zwei funktionellen Gruppen enthalten, von einer gesättigten oder ungesättigten aliphatischen Verbindung oder einer aromatischen Verbindung oder einer sowohl aliphatischen als auch aromatischen Verbindung ab.

Die aliphatische Verbindung oder der aliphatische Teil der sowohl aliphatischen als auch aromatischen Verbindung kann linear und/oder verzweigt und/oder cyclisch sein, wobei auch mehrere Cyclen pro Verbindung möglich sind. Weiter bevorzugt enthält die aliphatische Verbindung oder der aliphatische Teil der sowohl aliphatischen als auch aromatischen Verbindung 1 bis 15, weiter bevorzugt 1 bis 14, weiter bevorzugt 1 bis 13, weiter bevorzugt 1 bis 12, weiter bevorzugt 1 bis 11 und insbesondere bevorzugt 1 bis 10 C-Atome wie beispielsweise 1, 2, 3, 4, 5, 6, 7, 8, 9 oder 10 C-Atome. Insbesondere bevorzugt sind hierbei unter anderem Methan, Adamantan, Acetylen, Ethylen oder Butadien.

Die aromatische Verbindung oder der aromatische Teil der sowohl aromatischen als auch aliphatischen Verbindung kann einen oder auch mehrere Kerne wie beispielsweise zwei, drei, vier oder fünf Kerne aufweisen, wobei die Kerne getrennt voneinander und/oder mindestens zwei Kerne in kondensierter Form vorliegen können. Besonders bevorzugt weist die aromatische Verbindung oder der aromatische Teil der sowohl aliphatischen als auch aromatischen Verbindung einen, zwei oder drei Kerne auf, wobei einer oder zwei Kerne besonders bevorzugt sind. Unabhängig voneinander kann weiter jeder Kern der genannten Verbindung mindestens ein Heteroatom wie beispielsweise N, O, S, B, P, Si, Al, bevorzugt N, O und/oder S enthalten. Weiter bevorzugt enthält die aromatische Verbindung oder der aromatische Teil der sowohl aromatischen als auch aliphatischen Verbindung einen oder zwei C₆-Kerne, wobei die zwei entweder getrennt voneinander oder in kondensierter Form vorliegen. Insbesondere sind als aromatische Verbindungen Benzol, Naphthalin und/oder Biphenyl und/oder Bipyridyl und/oder Pyridyl zu nennen.

Mehr bevorzugt ist die mindestens zweizähnige organische Verbindung, ein aliphatischer oder aromatischer, acyclischer oder cyclischer Kohlenwasserstoff mit 1 bis 18, vorzugsweise 1 bis 10 und insbesondere 6 Kohlenstoffatomen, der zudem ausschließlich 2, 3 oder 4 Carboxylgruppen als funktionelle Gruppen aufweist.

Beispielsweise leitet sich die mindestens zweizähnige organische Verbindung von einer Dicarbonsäure ab, wie etwa Oxalsäure, Bernsteinsäure, Weinsäure, 1,4-Butandicarbonsäure, 1,4-Butendicarbonsäure, 4-Oxo-Pyran-2,6-dicarbonsäure, 1,6-Hexandicarbonsäure, Decandicarbonsäure, 1,8-Heptadecandicarbonsäure, 1,9-Heptadecandicarbonsäure, Heptadecandicarbonsäure, Acetylendicarbonsäure, 1,2-Benzoldicarbonsäure, 1,3-Benzoldicarbonsäure, 2,3-Pyridindicarbonsäure, Pyridin-2,3-dicarbonsäure, 1,3-Butadien-1,4-dicarbonsäure, 1,4-Benzoldicarbonsäure, p-Benzoldicarbonsäure, Imidazol-2,4-dicarbonsäure, 2-Methylchinolin-3,4-dicarbonsäure, Chinolin-2,4-dicarbonsäure, Chinoxalin-2,3-dicarbonsäure, 6-Chlorchinoxalin-2,3-dicarbonsäure, 4,4'-Diaminphenylmethan-3,3'-dicarbonsäure, Chinolin-3,4-dicarbonsäure, 7-Chlor-4-hydroxychinolin-2,8-dicarbonsäure, Diimiddicarbonsäure, Pyridin-2,6-dicarbonsäure, 2-Methylimidazol-4,5-dicarbonsäure, Thiophen-3,4-dicarbonsäure, 2-Isopropylimidazol-4,5-dicarbonsäure, Tetrahydropyran-4,4-dicarbonsäure, Perylen-3,9-dicarbonsäure, Perylendicarbonsäure, Pluriol E 200-dicarbonsäure, 3,6-Dioxaoctandicarbonsäure, 3,5-Cyclohexadien-1,2-dicarbonsäure, Octadicarbonsäure, Pentan-3,3-carbonsäure, 4,4'-Diamino-1,1'-diphenyl-3,3'-dicarbonsäure, 4,4'-Diaminodiphenyl-3,3'-dicarbonsäure, Benzidin-3,3'-dicarbonsäure, 1,4-Bis-(phenylamino)-benzol-2,5-dicarbonsäure, 1,1'-Dinaphthyldicarbonsäure, 7-Chlor-8-methylchinolin-2,3-dicarbonsäure, 1-Anilinoanthrachinon-2,4'-dicarbonsäure, Polytetrahydrofuran-250-dicarbonsäure, 1,4-Bis-(carboxymethyl)-piperazin-2,3-dicarbonsäure, 7-Chlorchinolin-3,8-dicarbonsäure, 1-(4-Carboxy)-phenyl-3-(4-chlor)-phenylpyrazolin-4,5-dicarbonsäure, 1,4,5,6,7,7,-Hexachlor-5-norbornen-2,3-dicarbonsäure, Phenylindandicarbonsäure, 1,3-Dibenzyl-2-oxo-imidazolidin-4,5-dicarbonsäure, 1,4-Cyclohexandicarbonsäure, Naphthalin-1,8-dicarbonsäure, 2-Benzoylbenzol-1,3-dicarbonsäure, 1,3-Dibenzyl-2-oxoimidazolidin-4,5-cis-dicarbonsäure, 2,2'-Bichinolin-4,4^{l}-dicarbonsäure, Pyridin-3,4-dicarbonsäure, 3,6,9-Trioxaundecandicarbonsäure, Hydroxybenzophenondicarbonsäure, Pluriol E 300-dicarbonsäure, Pluriol E 400-dicarbonsäure, Pluriol E 600-dicarbonsäure, Pyrazol-3,4-dicarbonsäure, 2,3-Pyrazindicarbonsäure, 5,6-Dimethyl-2,3-pyrazindicarbonsäure, 4,4'-Diaminodiphenyletherdiimiddicarbonsäure, 4,4'-Diaminodiphenylmethandiimiddicarbonsäure, 4,4'-Diaminodiphenylsulfondiimiddicarbonsäure, 1,4-Naphthalindicarbonsäure, 2,6-Naphthalindicarbonsäure, 1,3-Adamantandicarbonsäure, 1,8-Naphthalindicarbonsäure, 2,3-Naphthalindicarbonsäure, 8-Methoxy-2,3-naphthalindicarbonsäure, 8-Nitro-2,3-naphthalincarbonsäure, 8-Sulfo-2,3-naphthalindicarbonsäure, Anthracen-2,3-dicarbonsäure, 2',3'-Diphenyl-p-terphenyl-4,4"-dicarbonsäure, Diphenylether-4,4'-dicarbonsäure, Imidazol-4,5-dicarbonsäure, 4(1H)-Oxothiochromen-2,8-dicarbonsäure, 5-tert-Butyl-1,3-benzoldicarbonsäure, 7,8-Chinolindicarbonsäure, 4,5-Imidazoldicarbonsäure, 4-Cyclohexen-1,2-dicarbonsäure, Hexatriacontandicarbonsäure, Tetradecandicarbonsäure, 1,7-Heptadicarbonsäure, 5-Hydroxy-1,3-Benzoldicarbonsäure, 2,5-Dihydroxy-1,4-dicarbonsäure, Pyrazin-2,3-dicarbonsäure, Furan-2,5-dicarbonsäure, 1-Nonen-6,9-dicarbonsäure, Eicosendicarbonsäure, 4,4'-Dihydroxydiphenylmethan-3,3'-dicarbonsäure, 1-Amino-4-methyl-9,10-dioxo-9,10-dihydroanthracen-2,3-dicarbonsäure, 2,5-Pyridindicarbonsäure, Cyclohexen-2,3-dicarbonsäure,2,9-Dichlorfluorubin-4,11-dicarbonsäure, 7-Chlor-3-methylchinolin-6,8-dicarbonsäure, 2,4-Dichlorbenzophenon-2',5'-dicarbonsäure, 1,3-Benzoldicarbonsäure, 2,6-Pyridindicarbonsäure, 1-Methylpyrrol-3,4-dicarbonsäure, 1-Benzyl-1H-pyrrol-3,4-dicarbonsäure, Anthrachinon-1,5-dicarbonsäure, 3,5-Pyrazoldicarbonsäure, 2-Nitrobenzol-1,4-dicarbonsäure, Heptan-1,7-dicarbonsäure, Cyclobutan-1,1-dicarbonsäure 1,14-Tetradecandicarbonsäure, 5,6-Dehydronorbornan-2,3-dicarbonsäure, 5-Ethyl-2,3-pyridindicarbonsäure oder Campherdicarbonsäure,

Weiterhin mehr bevorzugt handelt es sich bei der mindestens zweizähnigen organischen Verbindung um eine der oben beispielhaft genannten Dicarbonsäure als solche.

Beispielsweise kann sich die mindestens zweizähnige organische Verbindung von einer Tricarbonsäure ableiten, wie etwa

2-Hydroxy-1,2,3-propantricarbonsäure, 7-Chlor-2,3,8-chinolintricarbonsäure, 1,2,3-, 1,2,4-Benzoltricarbonsäure, 1,2,4-Butantricarbonsäure, 2-Phosphono-1,2,4-butantricarbonsäure, 1,3,5-Benzoltricarbonsäure, 1-Hydroxy-1,2,3-Propantricarbonsäure, 4,5-Dihydro-4,5-dioxo-1H-pyrrolo[2,3-F]chinolin-2,7,9-tricarbonsäure, 5-Acetyl-3-amino-6-methylbenzol-1,2,4-tricarbonsäure, 3-Amino-5-benzoyl-6-methylbenzol-1,2,4-tricarbon+säure, 1,2,3-Propantricarbonsäure oder Aurintricarbonsäure,

Weiterhin mehr bevorzugt ist die mindestens zweizähnige organische Verbindung einer der oben beispielhaft genannten Tricarbonsäuren als solche.

Beispiele für eine mindestens zweizähnige organische Verbindung, die sich von einer Tetracarbonsäure ableitet, sind

1,1-Dioxidperylo[1,12-BCD]thiophen-3,4,9,10-tetracarbonsäure, Perylentetracarbonsäuren wie Perylen-3,4,9,10-tetracarbonsäure oder Perylen-1,12-sulfon-3,4,9,10-tetracarbonsäure, Butantetracarbonsäuren wie 1,2,3,4-Butantetracarbonsäure oder Meso1,2,3,4-Butantetracarbonsäure, Decan-2,4,6,8-tetracarbonsäure, 1,4,7,10,13,16-Hexaoxacyclooctadecan-2,3,11,12-tetracarbonsäure, 1,2,4,5-Benzoltetracarbonsäure, 1,2,11,12-Dodecantetracarbonsäure, 1,2,5,6-Hexan-tetracarbonsäure, 1,2,7,8-Octantetracarbonsäure, 1,4,5,8-Naphthalintetracarbonsäure, 1,2,9,10-Decantetracarbonsäure, Benzophenontetracarbonsäure, 3,3',4,4'-Benzo-phenontetracarbonsäure, Tetrahydrofurantetracarbonsäure oder Cyclopentantetracarbonsäuren wie Cyclopentan1,2,3,4-tetracarbonsäure.

Weiterhin mehr bevorzugt handelt es sich bei der mindestens zweizähnigen organischen Verbindung um eine der oben beispielhaft genannten Tetracarbonsäuren als solche.

Bevorzugte Heterocyclen als mindestens zweizähnige organische Verbindungen, bei denen eine koordinative Bindung über die Ringheteroatome erfolgt, sind die folgenden substituierten oder unsubstituierten Ringsysteme:

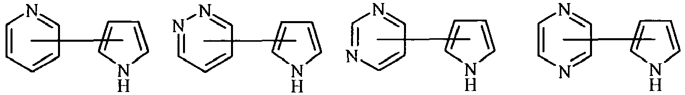

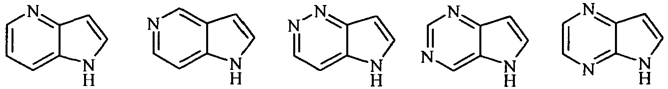

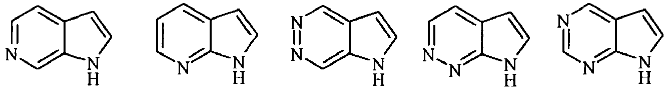

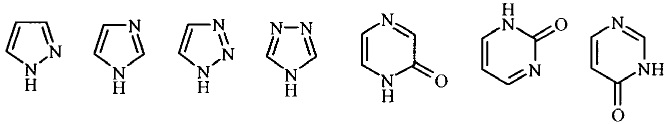

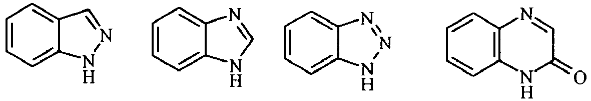

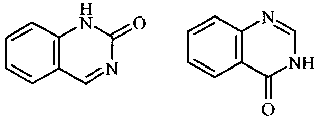

Ganz besonders bevorzugt werden gegebenenfalls mindestens einfach substituierte mono-, di-, tri-, tetra- oder höherkernige aromatische Di-, Tri- oder Tetracarbonsäuren eingesetzt, wobei jeder der Kerne mindestens ein Heteroatom enthalten kann, wobei zwei oder mehr Kerne gleiche oder unterschiedliche Heteroatome enthalten kann. Beispielsweise bevorzugt werden monokernige Dicarbonsäuren, monokernige Tricarbonsäuren, monokernige Tetracarbonsäuren, dikernige Dicarbonsäuren, dikernige Tricarbonsäuren, dikernige Tetracarbonsäuren, trikernige Dicarbonsäuren, trikernige Tricarbonsäuren, trikernige Tetracarbonsäuren, tetrakernige Dicarbonsäuren, tetrakernige Tricarbonsäuren und/oder tetrakernige Tetracarbonsäuren. Geeignete Heteroatome sind beispielsweise N, O, S, B, P bevorzugte Heteroatome sind hierbei N, S und/oder O. Als geeigneter Substituent ist diesbezüglich unter anderem -OH, eine Nitrogruppe, eine Aminogruppe oder eine Alkyl- oder Alkoxygruppe zu nennen.

Insbesondere bevorzugt werden als mindestens zweizähnige organische Verbindungen Imidazolate, wie 2-Methylimidazolat, Acetylendicarbonsäure (ADC), Campherdicarbonsäure, Fumarsäure, Bernsteinsäure, Benzoldicarbonsäuren wie Phthalsäure, Isophthalsäure, Terephthalsäure (BDC), Aminoterephthaläure, Triethylendiamin (TE-DA), Naphthalindicarbonsäuren (NDC), Biphenyldicarbonsäuren wie beispielsweise 4,4'-Biphenyldicarbonsäure (BPDC), Pyrazindicarbonsäuren, wie 2,5-Pyrazindicarbonsäure, Bipyridindicarbonsäuren wie beispielsweise 2,2'-Bipyridindicarbonsäuren wie beispielsweise 2,2'-Bipyridin-5,5'-dicarbonsäure, Benzoltricarbonsäuren wie beispielsweise 1,2,3-, 1,2,4-Benzoltricarbonsäure oder 1,3,5-Benzoltricarbonsäure (BTC), Benzoltetracarbonsäure, Adamantantetracarbonsäure (ATC), Adamantandibenzoat (ADB) Benzoltribenzoat (BTB), Methantetrabenzoat (MTB), Adamantantetrabenzoat oder Dihydroxyterephthalsäuren wie beispielsweise 2,5-Dihydroxyterephthalsäure (DHBDC), Tetrahydropyren-2,7-dicarbonsäure (HPDC), Biphenyltetracarbonsäure (BPTC), 1,3-Bis(4-pyridyl)propan (BPP) eingesetzt.

Ganz besonders bevorzugt werden unter anderem 2-Methylimidazol, 2-Ethylimidazol, Phthalsäure, Isophthalsäure, Terephthalsäure, 2,6-Naphthalindicarbonsäure, 1,4-Naphthalindicarbonsäure, 1,5-Naphthalindicarbonsäure, 1,2,3-Benzoltricarbonsäure, 1,2,4-Benzoltricarbonsäure, 1,3,5-Benzoltricarbonsäure, 1,2,4,5-Benzoltetracarbonsäure, AminoBDC, TEDA, Fumarsäure, Biphenyldicarboxylat, 1,5- und 2,6-Naphthalindicarbonsäure, tert.-Butylisophthalsäure, Dihydroxybenzoesäure, BTB, HPDC, BPTC, BPP.

Neben diesen mindestens zweizähnigen organischen Verbindungen kann das metallorganische Gerüstmaterial auch einen oder mehrere einzähnige Liganden und/oder einen oder mehrere mindestens zweizähnige Liganden, die sich nicht von einer Di-, Trioder Tetracarbonsäure ableiten, umfassen.

Neben diesen mindestens zweizähnigen organischen Verbindungen kann das metallorganische Gerüstmaterial auch eine oder mehrere einzähnige Liganden umfassen.

Aufgrund des Einsatzes in biologisch abbaubaren Folien bzw. Filmen sind bevorzugte mindestens zweizähnige organische Verbindungen Ameisensäure, Essigsäure oder eine aliphatische Di- oder Polycarbonsäure, wie beispielsweise Malonsäure, Fumarsäure oder ähnliche bzw. leiten sich von diesen ab.

Der Begriff "ableiten" bedeutet im Rahmen der vorliegenden Erfindung, dass die mindestens eine mindestens zweizähnige organische Verbindung in teilweise oder vollständig deprotonierter Form vorliegt. Weiterhin bedeutet der Begriff "ableiten", dass die mindestens eine mindestens zweizähnige organische Verbindung weitere Substituenten aufweisen kann. So kann eine Di-, oder Polycarbonsäure neben der Carbonsäurefunktionalität auch einen oder unabhängig voneinander mehrere Substituenten, wie Amino-, Hydroxyl, Methoxy, Halogen oder Methylgruppen, aufweisen. Vorzugsweise liegt kein weiterer Substituent vor. Im Rahmen der vorliegenden Erfindung bedeutet der Begriff "ableiten" auch, dass die Carbonsäurefunktionalität als Schwefelanalogon vorliegen kann. Schwefelanaloga sind -C(=O)SH sowie deren Tautomer und -C(S)SH.

Geeignete Lösemittel zur Herstellung des metallorganischen Gerüstmaterials sind u.a. Ethanol, Dimethylformamid, Toluol, Methanol, Chlorbenzol, Diethylformamid, Dimethylsulfoxid, Wasser, Wasserstoffperoxid, Methylamin, Natronlauge, N-Methylpolidonether, Acetonitril, Benzyl-chlorid, Triethylamin, Ethylenglykol und Gemische hiervon. Weitere Metallionen, mindestens zweizähnige organische Verbindungen und Lösemittel für die Herstellung von MOF sind u.a. in US-A 5,648,508 oder DE-A 101 11 230 beschrieben.

Die Porengröße des metallorganischen Gerüstmaterials kann durch Wahl des geeigneten Liganden und/oder der mindestens zweizähnigen organischen Verbindung gesteuert werden. Allgemein gilt, dass je größer die organische Verbindung desto größer die Porengröße ist. Vorzugsweise beträgt die Porengröße von 0,2 nm bis 30 nm, besonders bevorzugt liegt die Porengröße im Bereich von 0,3 nm bis 3 nm bezogen auf das kristalline Material.

In einem Formkörper enthaltend ein metallorganisches Gerüstmaterial treten jedoch auch größere Poren auf, deren Größenverteilung variieren kann. Vorzugsweise wird jedoch mehr als 50 % des gesamten Porenvolumens, insbesondere mehr als 75 %, von Poren mit einem Porendurchmesser von bis zu 1000 nm gebildet. Vorzugsweise wird jedoch ein Großteil des Porenvolumens von Poren aus zwei Durchmesserbereichen gebildet. Es ist daher weiter bevorzugt, wenn mehr als 25 % des gesamten Porenvolumens, insbesondere mehr als 50 % des gesamten Porenvolumens von Poren gebildet wird, die in einem Durchmesserbereich von 100 nm bis 800 nm liegen und wenn mehr als 15 % des gesamten Porenvolumens, insbesondere mehr als 25 % des gesamten Porenvolumens von Poren gebildet wird, die in einem Durchmesserbereich oder bis zu 10 nm liegen. Die Porenverteilung kann mittels Quecksilber-Porosimetrie bestimmt werden.

Die Teilchengröße in der Folie oder dem Film kann nach bekannten Methoden angepasst werden.

Nachfolgend sind Beispiele für metallorganische Gerüstmaterialien angegeben. Neben der Kennzeichnung des Gerüstmaterials, dem Metall sowie dem mindestens zweizähnigen Liganden ist weiterhin das Lösemittel sowie die Zellenparameter (Winkel α, β und γ sowie die Abstände A, B und C in Å) angegeben. Letztere wurden durch Röntgenbeugung bestimmt.

| **MOF-n** | **Inhaltsstoffe molares Verhältnis M+L** | **Solvens s** | **α** | **β** | **γ** | **a** | **b** | **c** | **Raumgruppe** |
|---|---|---|---|---|---|---|---|---|---|
| MOF-0 | Zn(NO₃)₂·6H₂O | Ethanol | 90 | 90 | 120 | 16.711 | 16.711 | 14.189 | P6(3)/ Mcm |
| | H₃(BTC) | | | | | | | | |
| MOF-2 | Zn(NO₃)₂·6H₂O | DMF Toluen | 90 | 102.8 | 90 | 6.718 | 15.49 | 12.43 | P2(1)/n |
| | (0.246 mmol) | | | | | | | | |
| | H₂(BDC) | | | | | | | | |
| | 0.241 mmol) | | | | | | | | |
| MOF-3 | Zn(NO₃)₂·6H₂O | DMF MeOH | 99.72 | 111.11 | 108.4 | 9.726 | 9.911 | 10.45 | P-1 |
| | (1.89 mmol) | | | | | | | | |
| | H₂(BDC) | | | | | | | | |
| | (1.93mmol) | | | | | | | | |
| MOF-4 | Zn(NO₃)₂·6H₂O | Ethanol | 90 | 90 | 90 | 14.728 | 14.728 | 14.728 | P2(1)3 |
| | (1.00 mmol) | | | | | | | | |
| | H₃(BTC) | | | | | | | | |
| | (0.5 mmol) | | | | | | | | |
| MOF-5 | Zn(NO₃)₂·6H₂O | DMF Chlorbenzen | 90 | 90 | 90 | 25.669 | 25.669 | 25.669 | Fm-3m |
| | (2.22 mmol) | | | | | | | | |
| | H₂(BDC) | | | | | | | | |
| | (2.17 mmol) | | | | | | | | |
| MOF-38 | Zn(NO₃)₂·6H₂O | DMF Chlorbenzen | 90 | 90 | 90 | 20.657 | 20.657 | 17.84 | I4cm |
| | (0.27 mmol) | | | | | | | | |
| | H₃(BTC) | | | | | | | | |
| | (0.15 mmol) | | | | | | | | |
| | | | | | | | | | |
| MOF-31 | Zn(NO₃)₂·6H₂O | Ethanol | 90 | 90 | 90 | 10.821 | 10.821 | 10.821 | Pn(-3)m |
| Zn(ADC)₂ | 0.4 mmol | | | | | | | | |
| | H₂(ADC) 0.8 mmol | | | | | | | | |
| MOF-12 | Zn(NO₃)₂·6H₂O | Ethanol | 90 | 90 | 90 | 15.745 | 16.907 | 18.167 | Pbca |
| Zn₂(ATC) | 0.3 mmol | | | | | | | | |
| | H₄(ATC) | | | | | | | | |
| | 0.15 mmol | | | | | | | | |
| MOF-20 | Zn(NO₃)₂·6H₂O | DMF Chlorbenzen | 90 | 92.13 | 90 | 8.13 | 16.444 | 12.807 | P2(1)/c |
| ZnNDC | 0.37 mmol | | | | | | | | |
| | H₂NDC | | | | | | | | |
| | 0.36 mmol | | | | | | | | |
| MOF-37 | Zn(NO₃)₂·6H₂O | DEF | 72.38 | 83.16 | 84.33 | 9.952 | 11.576 | 15.556 | P-1 |
| | 0.2 mmol | Chlorbenzen | | | | | | | |
| | H₂NDC | | | | | | | | |
| | 0.2 mmol | | | | | | | | |
| MOF-8 | Tb(NO₃)₃·5H₂O | DMSO MeOH | 90 | 115.7 | 90 | 19.83 | 9.822 | 19.183 | C2/c |
| Tb₂ (ADC) | 0.10 mmol | | | | | | | | |
| | H₂ADC 0.20 mmol | | | | | | | | |
| MOF-9 | Tb(NO₃)₃·5H₂O | DMSO | 90 | 102.09 | 90 | 27.056 | 16.795 | 28.139 | C2/c |
| Tb₂ (ADC) | 0.08 mmol | | | | | | | | |
| | H₂ADB | | | | | | | | |
| | 0.12 mmol | | | | | | | | |
| MOF-6 | Tb(NO₃)₃·5H₂O | DMF MeOH | 90 | 91.28 | 90 | 17.599 | 19.996 | 10.545 | P21/c |
| | 0.30 mmol | | | | | | | | |
| | H₂ (BDC) | | | | | | | | |
| | 0.30 mmol | | | | | | | | |
| MOF-7 | Tb(NO₃)₃·5H₂O | H₂O | 102.3 | 91.12 | 101.5 | 6.142 | 10.069 | 10.096 | P-1 |
| | 0.15 mmol | | | | | | | | |
| | H₂(BDC) | | | | | | | | |
| | 0.15 mmol | | | | | | | | |
| MOF-69A | Zn(NO₃)₂·6H₂O | DEF H₂O₂ MeNH₂ | 90 | 111.6 | 90 | 23.12 | 20.92 | 12 | C2/c |
| | 0.083 mmol | | | | | | | | |
| | 4,4'BPDC | | | | | | | | |
| | 0.041 mmol | | | | | | | | |
| MOF-69B | Zn(NO₃)₂·6H₂O | DEF H₂O₂ MeNH₂ | 90 | 95.3 | 90 | 20.17 | 18.55 | 12.16 | C2/c |
| | 0.083 mmol | | | | | | | | |
| | 2,6-NCD | | | | | | | | |
| | 0.041 mmol | | | | | | | | |
| MOF-11 | Cu(NO₃)₂·2.5H₂O | H₂O | 90 | 93.86 | 90 | 12.987 | 11.22 | 11.336 | C2/c |
| Cu₂(ATC) | 0.47 mmol | | | | | | | | |
| | H₂ATC | | | | | | | | |
| | 0.22 mmol | | | | | | | | |
| MOF-11 | | | 90 | 90 | 90 | 8.4671 | 8.4671 | 14.44 | P42/ mmc |
| Cu₂(ATC) dehydr. | | | | | | | | | |
| MOF-14 | Cu(NO₃)₂·2.5H₂O | H₂O DMF EtOH | 90 | 90 | 90 | 26.946 | 26.946 | 26.946 | Im-3 |
| Cu₃ (BTB) | 0.28 mmol | | | | | | | | |
| | H₃BTB | | | | | | | | |
| | 0.052 mmol | | | | | | | | |
| MOF-32 | Cd(NO₃)₂·4H₂O | H₂O NaOH | 90 | 90 | 90 | 13.468 | 13.468 | 13.468 | P(-4)3m |
| Cd(ATC) | 0.24 mmol | | | | | | | | |
| | H₄ATC | | | | | | | | |
| | 0.10 mmol | | | | | | | | |
| MOF-33 | ZnCl₂ | H₂O DMF EtOH | 90 | 90 | 90 | 19.561 | 15.255 | 23.404 | Imma |
| Zn₂ (ATB) | 0.15 mmol | | | | | | | | |
| | H₄ATB | | | | | | | | |
| | 0.02 mmol | | | | | | | | |
| MOF-34 | Ni(NO₃)₂·6H₂O | H₂O NaOH | 90 | 90 | 90 | 10.066 | 11.163 | 19.201 | P2₁2₁2₁ |
| Ni(ATC) | 0.24 mmol | | | | | | | | |
| | H₄ATC | | | | | | | | |
| | 0.10 mmol | | | | | | | | |
| MOF-36 | Zn(NO₃)₂·4H₂O | H₂O DMF | 90 | 90 | 90 | 15.745 | 16.907 | 18.167 | Pbca |
| Zn₂ (MTB) | 0.20 mmol | | | | | | | | |
| | H₄MTB | | | | | | | | |
| | 0.04 mmol | | | | | | | | |
| MOF-39 | Zn(NO₃)₂ 4H₂O | H₂O DMF EtOH | 90 | 90 | 90 | 17.158 | 21.591 | 25.308 | Pnma |
| Zn₃O(HBTB) | 0.27 mmol | | | | | | | | |
| | H₃BTB | | | | | | | | |
| | 0.07 mmol | | | | | | | | |
| NO305 | FeCl₂·4H₂O | DMF | 90 | 90 | 120 | 8.2692 | 8.2692 | 63.566 | R-3c |
| | 5.03 mmol | | | | | | | | |
| | Ameisensre. | | | | | | | | |
| | 86.90 mmol | | | | | | | | |
| NO306A | FeCl₂·4H₂O | DEF | 90 | 90 | 90 | 9.9364 | 18.374 | 18.374 | Pbcn |
| | 5.03 mmol | | | | | | | | |
| | Ameisensre. | | | | | | | | |
| | 86.90 mmol | | | | | | | | |
| | | | | | | | | | |
| NO29 | Mn(Ac)₂·4H₂O | DMF | 120 | 90 | 90 | 14.16 | 33.521 | 33.521 | P-1 |
| MOF-0 ähnlich | 0.46 mmol | | | | | | | | |
| | H₃BTC | | | | | | | | |
| | 0.69 mmol | | | | | | | | |
| BPR48 | Zn(NO₃)₂ 6H₂O | DMSO Toluen | 90 | 90 | 90 | 14.5 | 17.04 | 18.02 | Pbca |
| A2 | 0.012 mmol | | | | | | | | |
| | H₂BDC | | | | | | | | |
| | 0.012 mmol | | | | | | | | |
| BPR69 | Cd(NO₃)₂ 4H₂O | DMSO | 90 | 98.76 | 90 | 14.16 | 15.72 | 17.66 | Cc |
| B1 | 0.0212 mmol | | | | | | | | |
| | H₂BDC | | | | | | | | |
| | 0.0428 mmol | | | | | | | | |
| BPR92 | Co(NO₃)₂·6H₂O | NMP | 106.3 | 107.63 | 107.2 | 7.5308 | 10.942 | 11.025 | P1 |
| A2 | 0.018 mmol | | | | | | | | |
| | H₂BDC | | | | | | | | |
| | 0.018 mmol | | | | | | | | |
| BPR95 | Cd(NO₃)₂ 4H₂O | NMP | 90 | 112.8 | 90 | 14.460 | 11.085 | 15.829 | P2(1)/n |
| C5 | 0.012 mmol | | | | | | | | |
| | H₂BDC | | | | | | | | |
| | 0.36 mmol | | | | | | | | |
| Cu C₆H₄O₆ | Cu(NO₃)₂·5H₂O | DMF Chlorbenzen | 90 | 105.29 | 90 | 15.259 | 14.816 | 14.13 | P2(1)/c |
| | 0.370 mmol | | | | | | | | |
| | H₂BDC(OH)₂ | | | | | | | | |
| | 0.37 mmol | | | | | | | | |
| M(BTC) | Co(SO₄) H₂O | DMF | wie MOF-0 | | | | | | |
| MOF-0 ähnlich | 0.055 mmol | | | | | | | | |
| | H₃BTC | | | | | | | | |
| | 0.037 mmol | | | | | | | | |
| Tb(C₆H₄O₆) | Tb(NO₃)₃·5H₂O | DMF Chlorbenzen | 104.6 | 107.9 | 97.147 | 10.491 | 10.981 | 12.541 | P-1 |
| | 0.370 mmol | | | | | | | | |
| | H₂(C₆H₄O₆) | | | | | | | | |
| | 0.56 mmol | | | | | | | | |
| Zn (C₂O₄) | ZnCl₂ | DMF | 90 | 120 | 90 | 9.4168 | 9.4168 | 8.464 | P(-3)1m |
| | 0.370 mmol | Chlor- | | | | | | | |
| | Oxalsäure | benzen | | | | | | | |
| | 0.37 mmol | | | | | | | | |
| Co(CHO) | Co(NO₃)₂·5H₂O | DMF | 90 | 91.32 | 90 | 11.328 | 10.049 | 14.854 | P2(1)/n |
| | 0.043 mmol | | | | | | | | |
| | Ameisensre. | | | | | | | | |
| | 1.60 mmol | | | | | | | | |
| Cd(CHO) | Cd(NO₃)₂·4H₂O | DMF | 90 | 120 | 90 | 8.5168 | 8.5168 | 22.674 | R-3c |
| | 0.185 mmol | | | | | | | | |
| | formic acid | | | | | | | | |
| | 0.185 mmol | | | | | | | | |
| Cu(C₃H₂O₄) | Cu(NO₃)₂·2.5H₂O | DMF | 90 | 90 | 90 | 8.366 | 8.366 | 11.919 | P43 |
| | 0.043 mmol | | | | | | | | |
| | Malonsre. | | | | | | | | |
| | 0.192 mmol | | | | | | | | |
| Zn₆ (NDC)₅ | Zn(NO₃)₂·6H₂O | DMF Chlor-benzen H₂O₂ | 90 | 95.902 | 90 | 19.504 | 16.482 | 14.64 | C2/m |
| MOF-48 | 0.097 mmol | | | | | | | | |
| | 14 NDC | | | | | | | | |
| | 0.069 mmol | | | | | | | | |
| | | | | | | | | | |
| MOF-47 | Zn(NO₃)₂ 6H₂O | DMF Chlor-benzen H₂O₂ | 90 | 92.55 | 90 | 11.303 | 16.029 | 17.535 | P2(1)/c |
| | 0.185 mmol | | | | | | | | |
| | H₂(BDC[CH₃]₄) | | | | | | | | |
| | 0.185 mmol | | | | | | | | |
| MO25 | Cu(NO₃)₂·2.5H₂O | DMF | 90 | 112.0 | 90 | 23.880 | 16.834 | 18.389 | P2(1)/c |
| | 0.084 mmol | | | | | | | | |
| | BPhDC | | | | | | | | |
| | 0.085 mmol | | | | | | | | |
| Cu-Thio | Cu(NO₃)₂·2.5H₂O | DEF | 90 | 113.6 | 90 | 15.474 7 | 14.514 | 14.032 | P2(1)/c |
| | 0.084 mmol | | | | | | | | |
| | Thiophen Dicarbonsre. | | | | | | | | |
| | 0.085 mmol | | | | | | | | |
| CIBDC1 | Cu(NO₃)₂·2.5H₂O0. | DMF | 90 | 105.6 | 90 | 14.911 | 15.622 | 18.413 | C2/c |
| | 084 mmol | | | | | | | | |
| | H₂(BDCCl₂) | | | | | | | | |
| | 0.085 mmol | | | | | | | | |
| MOF-101 | Cu(NO₃)₂·2.5H₂O | DMF | 90 | 90 | 90 | 21.607 | 20.607 | 20.073 | Fm3m |
| | 0.084 mmol | | | | | | | | |
| | BrBDC | | | | | | | | |
| | 0.085 mmol | | | | | | | | |
| Zn₃(BTC)₂ | ZnCl₂ | DMF EtOH Base zugegeben | 90 | 90 | 90 | 26.572 | 26.572 | 26.572 | Fm-3m |
| | 0.033 mmol | | | | | | | | |
| | H₃BTC | | | | | | | | |
| | 0.033 mmol | | | | | | | | |
| MOF-j | Co(CH₃CO₂)₂·4H₂ O | H₂O | 90 | 112.0 | 90 | 17.482 | 12.963 | 6.559 | C2 |
| | (1.65 mmol) | | | | | | | | |
| | H₃(BZC) | | | | | | | | |
| | (0.95 mmol) | | | | | | | | |
| MOF-n | Zn(NO₃)₂·6H₂O | Ethanol | 90 | 90 | 120 | 16.711 | 16.711 | 14.189 | P6(3)/mcm |
| | H₃ (BTC) | | | | | | | | |
| PbBDC | Pb(NO₃)₂ | DMF Ethanol | 90 | 102.7 | 90 | 8.3639 | 17.991 | 9.9617 | P2(1)/n |
| | (0.181 mmol) | | | | | | | | |
| | H₂(BDC) | | | | | | | | |
| | (0.181 mmol) | | | | | | | | |
| Znhex | Zn(NO₃)₂·6H₂O | DMF p-Xylen Ethanol | 90 | 90 | 120 | 37.116 5 | 37.117 | 30.019 | P3(1)c |
| | (0.171 mmol) | | | | | | | | |
| | H₃BTB | | | | | | | | |
| | (0.114 mmol) | | | | | | | | |
| AS16 | FeBr₂ | DMF anhydr. | 90 | 90.13 | 90 | 7.2595 | 8.7894 | 19.484 | P2(1)c |
| | 0.927 mmol | | | | | | | | |
| | H₂(BDC) | | | | | | | | |
| | 0.927 mmol | | | | | | | | |
| AS27-2 | FeBr₂ | DMF anhydr. | 90 | 90 | 90 | 26.735 | 26.735 | 26.735 | Fm3m |
| | 0.927 mmol | | | | | | | | |
| | H₃(BDC) | | | | | | | | |
| | 0.464 mmol | | | | | | | | |
| AS32 | FeCl₃ | DMF anhydr. Ethanol | 90 | 90 | 120 | 12.535 | 12.535 | 18.479 | P6(2)c |
| | 1.23 mmol | | | | | | | | |
| | H₂(BDC) | | | | | | | | |
| | 1.23 mmol | | | | | | | | |
| | | | | | | | | | |
| AS54-3 | FeBr₂ | DMF anhydr. n-Propanol | 90 | 109.98 | 90 | 12.019 | 15.286 | 14.399 | C2 |
| | 0.927 | | | | | | | | |
| | BPDC | | | | | | | | |
| | 0.927 mmol | | | | | | | | |
| AS61-4 | FeBr₂ | Pyridin anhydr. | 90 | 90 | 120 | 13.017 | 13.017 | 14.896 | P6(2)c |
| | 0.927 mmol | | | | | | | | |
| | m-BDC | | | | | | | | |
| | 0.927 mmol | | | | | | | | |
| AS68-7 | FeBr₂ | DMF anhydr. Pyridin | 90 | 90 | 90 | 18.340 7 | 10.036 | 18.039 | Pca2₁ |
| | 0.927 mmol | | | | | | | | |
| | m-BDC | | | | | | | | |
| | 1.204 mmol | | | | | | | | |
| Zn(ADC) | Zn(NO₃)₂·6H₂O | DMF Chlor-benzen | 90 | 99.85 | 90 | 16.764 | 9.349 | 9.635 | C2/c |
| | 0.37 mmol | | | | | | | | |
| | H₂(ADC) | | | | | | | | |
| | 0.36 mmol | | | | | | | | |
| MOF-12 | Zn(NO₃)₂·6H₂O | Ethanol | 90 | 90 | 90 | 15.745 | 16.907 | 18.167 | Pbca |
| Zn₂ (ATC) | 0.30 mmol | | | | | | | | |
| | H₄(ATC) | | | | | | | | |
| | 0.15 mmol | | | | | | | | |
| MOF-20 | Zn(NO₃)₂·6H₂O | DMF Chlor-benzen | 90 | 92.13 | 90 | 8.13 | 16.444 | 12.807 | P2(1)/c |
| ZnNDC | 0.37 mmol | | | | | | | | |
| | H₂NDC | | | | | | | | |
| | 0.36 mmol | | | | | | | | |
| MOF-37 | Zn(NO₃)₂·6H₂O | DEF Chlor-benzen | 72.38 | 83.16 | 84.33 | 9.952 | 11.576 | 15.556 | P-1 |
| | 0.20 mmol | | | | | | | | |
| | H₂NDC | | | | | | | | |
| | 0.20 mmol | | | | | | | | |
| Zn(NDC) (DMSO) | Zn(NO₃)₂·6H₂O | DMSO | 68.08 | 75.33 | 88.31 | 8.631 | 10.207 | 13.114 | P-1 |
| | H₂NDC | | | | | | | | |
| Zn(NDC) | Zn(NO₃)₂·6H₂O | | 90 | 99.2 | 90 | 19.289 | 17.628 | 15.052 | C2/c |
| | H₂NDC | | | | | | | | |
| Zn(HPDC) | Zn(NO₃)₂·4H₂O | DMF H₂O | 107.9 | 105.06 | 94.4 | 8.326 | 12.085 | 13.767 | P-1 |
| | 0.23 mmol | | | | | | | | |
| | H₂(HPDC) | | | | | | | | |
| | 0.05 mmol | | | | | | | | |
| Co(HPDC) | Co(NO₃)₂·6H₂O | DMF H₂O/ Ethanol | 90 | 97.69 | 90 | 29.677 | 9.63 | 7.981 | C2/c |
| | 0.21 mmol | | | | | | | | |
| | H₂ (HPDC) | | | | | | | | |
| | 0.06 mmol | | | | | | | | |
| Zn₃(PDC)2.5 | Zn(NO₃)₂·4H₂O | DMF/ ClBz H₂0/ TEA | 79.34 | 80.8 | 85.83 | 8.564 | 14.046 | 26.42E | P-1 |
| | 0.17 mmol | | | | | | | | |
| | H₂(HPDC) | | | | | | | | |
| | 0.05 mmol | | | | | | | | |
| Cd₂ (TPDC)2 | Cd(NO₃)₂·4H₂O | Methanol/ CHP H₂O | 70.59 | 72.75 | 87.14 | 10.102 | 14.412 | 14.964 | P-1 |
| | 0.06 mmol | | | | | | | | |
| | H₂(HPDC) | | | | | | | | |
| | 0.06 mmol | | | | | | | | |
| Tb(PDC)1.5 | Tb(NO₃)₃·5H₂O | DMF H₂O/ Ethanol | 109.8 | 103.61 | 100.14 | 9.829 | 12.11 | 14.62E | P-1 |
| | 0.21 mmol | | | | | | | | |
| | H₂(PDC) | | | | | | | | |
| | 0.034 mmol | | | | | | | | |
| | | | | | | | | | |
| ZnDBP | Zn(NO₃)₂·6H₂O | MeOH | 90 | 93.67 | 90 | 9.254 | 10.762 | 27.93 | P2/n |
| | 0.05 mmol | | | | | | | | |
| | Dibenzylphosphat | | | | | | | | |
| | 0.10 mmol | | | | | | | | |
| Zn₃(BPDC) | ZnBr₂ | DMF | 90 | 102.76 | 90 | 11.49 | 14.79 | 19.18 | P21/n |
| | 0.021 mmol | | | | | | | | |
| | 4,4'BPDC | | | | | | | | |
| | 0.005 mmol | | | | | | | | |
| CdBDC | Cd(NO₃)₂·4H₂O | DMF Na₂SiO₃ (aq) | 90 | 95.85 | 90 | 11.2 | 11.11 | 16.71 | P21/n |
| | 0.100 mmol | | | | | | | | |
| | H₂(BDC) | | | | | | | | |
| | 0.401 mmol | | | | | | | | |
| Cd-mBDC | Cd(NO₃)₂·4H₂O | DMF MeNH₂ | 90 | 101.1 | 90 | 13.69 | 18.25 | 14.91 | C2/c |
| | 0.009 mmol | | | | | | | | |
| | H₂(mBDC) | | | | | | | | |
| | 0.018 mmol | | | | | | | | |
| Zn₄OBND C | Zn(NO₃)₂·6H₂O | DEF MeNH₂ | 90 | 90 | 90 | 22.35 | 26.05 | 59.56 | Fmmm |
| | 0.041 mmol | | | | | | | | |
| | BNDC | H₂O₂ | | | | | | | |
| Eu(TCA) | Eu(NO₃)₃·6H₂O | DMF Chlor-benzen | 90 | 90 | 90 | 23.325 | 23.325 | 23.325 | Pm-3n |
| | 0.14 mmol | | | | | | | | |
| | TCA | | | | | | | | |
| | 0.026 mmol | | | | | | | | |
| Tb(TCA) | Tb(NO₃)₃·6H₂O | DMF Chlor-benzen | 90 | 90 | 90 | 23.272 | 23.272 | 23.372 | Pm-3n |
| | 0.069 mmol | | | | | | | | |
| | TCA | | | | | | | | |
| | 0.026 mmol | | | | | | | | |
| Formate | Ce(NO₃)₃·6H₂O | H₂O Ethanol | 90 | 90 | 120 | 10.668 | 10.667 | 4.107 | R-3m |
| | 0.138 mmol | | | | | | | | |
| | Ameisensre. | | | | | | | | |
| | 0.43 mmol | | | | | | | | |
| | FeCl₂·4H₂O | DMF | 90 | 90 | 120 | 8.2692 | 8.2692 | 63.566 | R-3c |
| | 5.03 mmol | | | | | | | | |
| | Ameisensre. | | | | | | | | |
| | 86.90 mmol | | | | | | | | |
| | FeCl₂·4H₂O | DEF | 90 | 90 | 90 | 9.9364 | 18.374 | 18.374 | Pbcn |
| | 5.03 mmol | | | | | | | | |
| | Ameisensre. | | | | | | | | |
| | 86.90 mmol | | | | | | | | |
| | FeCl₂·4H₂O | DEF | 90 | 90 | 90 | 8.335 | 8.335 | 13.34 | P-31c |
| | 5.03 mmol | | | | | | | | |
| | Ameisensre. | | | | | | | | |
| | 86.90 mmol | | | | | | | | |
| NO330 | FeCl₂·4H₂O | Formamid | 90 | 90 | 90 | 8.7749 | 11.655 | 8.3297 | Pnna |
| | 0.50 mmol | | | | | | | | |
| | Ameisensre. | | | | | | | | |
| | 8.69 mmol | | | | | | | | |
| NO332 | FeCl₂·4H₂O | DIP | 90 | 90 | 90 | 10.031 | 18.808 | 18.355 | Pbcn |
| | 0.50 mmol | | | | | 3 | | | |
| | Ameisensre. | | | | | | | | |
| | 8.69 mmol | | | | | | | | |
| | | | | | | | | | |
| NO333 | FeCl₂·4H₂O | DBF | 90 | 90 | 90 | 45.275 4 | 23.861 | 12.441 | Cmcm |
| | 0.50 mmol | | | | | | | | |
| | Ameisensre. | | | | | | | | |
| | 8.69 mmol | | | | | | | | |
| NO335 | FeCl₂·4H₂O | CHF | 90 | 91.372 | 90 | 11.596 4 | 10.187 | 14.945 | P21/n |
| | 0.50 mmol | | | | | | | | |
| | Ameisensre. | | | | | | | | |
| | 8.69 mmol | | | | | | | | |
| NO336 | FeCl₂·4H₂O | MFA | 90 | 90 | 90 | 11.794 5 | 48.843 | 8.4136 | Pbcm |
| | 0.50 mmol | | | | | | | | |
| | Ameisensre. | | | | | | | | |
| | 8.69 mmol | | | | | | | | |
| NO13 | Mn(Ac)₂·4H₂O | Ethanol | 90 | 90 | 90 | 18.66 | 11.762 | 9.418 | Pbcn |
| | 0.46 mmol | | | | | | | | |
| | Benzoesre. | | | | | | | | |
| | 0.92 mmol | | | | | | | | |
| | Bipyridin | | | | | | | | |
| | 0.46 mmol | | | | | | | | |
| NO29 MOF-0 ähnlich | Mn(Ac)₂·4H₂O | DMF | 120 | 90 | 90 | 14.16 | 33.521 | 33.521 | P-1 |
| | 0.46 mmol | | | | | | | | |
| | H₃BTC | | | | | | | | |
| | 0.69 mmol | | | | | | | | |
| Mn(hfac)₂ (O₂CC₆H₅) | Mn(Ac)₂·4H₂O | Ether | 90 | 95.32 | 90 | 9.572 | 17.162 | 14.041 | C2/c |
| | 0.46 mmol | | | | | | | | |
| | Hfac | | | | | | | | |
| | 0.92 mmol | | | | | | | | |
| | Bipyridin | | | | | | | | |
| | 0.46 mmol | | | | | | | | |
| BPR43G2 | Zn(NO₃)₂·6H₂O | DMF CH₃CN | 90 | 91.37 | 90 | 17.96 | 6.38 | 7.19 | C2/c |
| | 0.0288 mmol | | | | | | | | |
| | H₂BDC | | | | | | | | |
| | 0.0072 mmol | | | | | | | | |
| BPR48A2 | Zn(NO₃)₂ 6H₂O | DMSO Toluen | 90 | 90 | 90 | 14.5 | 17.04 | 18.02 | Pbca |
| | 0.012 mmol | | | | | | | | |
| | H₂BDC | | | | | | | | |
| | 0.012 mmol | | | | | | | | |
| BPR49B1 | Zn(NO₃)₂ 6H₂O | DMSO Methanol | 90 | 91.172 | 90 | 33.181 | 9.824 | 17.884 | C2/c |
| | 0.024 mmol | | | | | | | | |
| | H₂BDC | | | | | | | | |
| | 0.048 mmol | | | | | | | | |
| BPR56E1 | Zn(NO₃)₂ 6H₂O | DMSO n-Propanol | 90 | 90.096 | 90 | 14.587 3 | 14.153 | 17.183 | P2(1)/n |
| | 0.012 mmol | | | | | | | | |
| | H₂BDC | | | | | | | | |
| | 0.024 mmol | | | | | | | | |
| BPR68D10 | Zn(NO₃)₂ 6H₂O | DMSO Benzen | 90 | 95.316 | 90 | 10.062 7 | 10.17 | 16.413 | P2(1)/c |
| | 0.0016 mmol | | | | | | | | |
| | H₃BTC | | | | | | | | |
| | 0.0064 mmol | | | | | | | | |
| BPR69B1 | Cd(NO₃)₂ 4H₂O | DMSO | 90 | 98.76 | 90 | 14.16 | 15.72 | 17.66 | Cc |
| | 0.0212 mmol | | | | | | | | |
| | H₂BDC | | | | | | | | |
| | 0.0428 mmol | | | | | | | | |
| | | | | | | | | | |
| BPR73E4 | Cd(NO₃)₂ 4H₂O | DMSO Toluen | 90 | 92.324 | 90 | 8.7231 | 7.0568 | 18.438 | P2(1)/n |
| | 0.006 mmol | | | | | | | | |
| | H₂BDC | | | | | | | | |
| | 0.003 mmol | | | | | | | | |
| BPR76D5 | Zn(NO₃)₂ 6H₂O | DMSO | 90 | 104.17 | 90 | 14.419 1 | 6.2599 | 7.0611 | Pc |
| | 0.0009 mmol | | | | | | | | |
| | H₂BzPDC | | | | | | | | |
| | 0.0036 mmol | | | | | | | | |
| BPR80B5 | Cd(NO₃)₂·4H₂O | DMF | 90 | 115.11 | 90 | 28.049 | 9.184 | 17.837 | C2/c |
| | 0.018 mmol | | | | | | | | |
| | H₂BDC | | | | | | | | |
| | 0.036 mmol | | | | | | | | |
| BPR80H5 | Cd(NO₃)₂ 4H₂O | DMF | 90 | 119.06 | 90 | 11.474 6 | 6.2151 | 17.268 | P2/c |
| | 0.027 mmol | | | | | | | | |
| | H₂BDC | | | | | | | | |
| | 0.027 mmol | | | | | | | | |
| BPR82C6 | Cd(NO₃)₂ 4H₂O | DMF | 90 | 90 | 90 | 9.7721 | 21.142 | 27.77 | Fdd2 |
| | 0.0068 mmol | | | | | | | | |
| | H₂BDC | | | | | | | | |
| | 0.202 mmol | | | | | | | | |
| BPR86C3 | Co(NO₃)₂ 6H₂O | DMF | 90 | 90 | 90 | 18.344 9 | 10.031 | 17.983 | Pca2(1) |
| | 0.0025 mmol | | | | | | | | |
| | H₂BDC | | | | | | | | |
| | 0.075 mmol | | | | | | | | |
| BPR86H6 | Cd(NO₃)₂·6H₂O | DMF | 80.98 | 89.69 | 83.41 2 | 9.8752 | 10.263 | 15.362 | P-1 |
| | 0.010 mmol | | | | | | | | |
| | H₂BDC | | | | | | | | |
| | 0.010 mmol | | | | | | | | |
| | Co(NO₃)₂ 6H₂O | NMP | 106.3 | 107.63 | 107.2 | 7.5308 | 10.942 | 11.025 | P1 |
| BPR95A2 | Zn(NO₃)₂ 6H₂O | NMP | 90 | 102.9 | 90 | 7.4502 | 13.767 | 12.713 | P2(1)/c |
| | 0.012 mmol | | | | | | | | |
| | H₂BDC | | | | | | | | |
| | 0.012 mmol | | | | | | | | |
| CuC₆F₄O₄ | Cu(NO₃)₂·2.5H₂O | DMF Chlor-benzen | 90 | 98.834 | 90 | 10.967 5 | 24.43 | 22.553 | P2(1)/n |
| | 0.370 mmol | | | | | | | | |
| | H₂BDC(OH)₂ | | | | | | | | |
| | 0.37 mmol | | | | | | | | |
| Fe Formic | FeCl₂·4H₂O | DMF | 90 | 91.543 | 90 | 11.495 | 9.963 | 14.48 | P2(1)/n |
| | 0.370 mmol | | | | | | | | |
| | Ameisensre. | | | | | | | | |
| | 0.37 mmol | | | | | | | | |
| Mg Formic | Mg(NO₃)₂·6H₂O | DMF | 90 | 91.359 | 90 | 11.383 | 9.932 | 14.656 | P2(1)/n |
| | 0.370 mmol | | | | | | | | |
| | Ameisensre. | | | | | | | | |
| | 0.37 mmol | | | | | | | | |
| MgC₆H₄O₆ | Mg(NO₃)₂·6H₂O | DMF | 90 | 96.624 | 90 | 17.245 | 9.943 | 9.273 | C2/c |
| | 0.370 mmol | | | | | | | | |
| | H₂BDC(OH)₂ | | | | | | | | |
| | 0.37 mmol | | | | | | | | |
| Zn C₂H₄BDC | ZnCl₂ | DMF | 90 | 94.714 | 90 | 7.3386 | 16.834 | 12.52 | P2(1)/n |
| MOF-38 | 0.44 mmol | | | | | | | | |
| | CBBDC | | | | | | | | |
| | 0.261 mmol | | | | | | | | |
| MOF-49 | ZnCl₂ | DMF CH₃CN | 90 | 93.459 | 90 | 13.509 | 11.984 | 27.039 | P2/c |
| | 0.44 mmol | | | | | | | | |
| | m-BDC | | | | | | | | |
| | 0.261 mmol | | | | | | | | |
| MOF-26 | Cu(NO₃)₂·5H₂O | DMF | 90 | 95.607 | 90 | 20.879 | 16.017 | 26.176 | P2(1)/n |
| | 0.084 mmol | | | | | 7 | | | |
| | DCPE | | | | | | | | |
| | 0.085 mmol | | | | | | | | |
| | | | | | | | | | |
| MOF-112 | Cu(NO₃)₂·2.5H₂O | DMF Ethanol | 90 | 107.49 | 90 | 29.324 1 | 21.297 | 18.069 | C2/c |
| | 0.084 mmol | | | | | | | | |
| | *o*-Br-*m*-BDC | | | | | | | | |
| | 0.085 mmol | | | | | | | | |
| MOF-109 | Cu(NO₃)₂·2.5H₂O | DMF | 90 | 111.98 | 90 | 23.880 1 | 16.834 | 18.389 | P2(1)/c |
| | 0.084 mmol | | | | | | | | |
| | KDB | | | | | | | | |
| | 0.085 mmol | | | | | | | | |
| MOF-111 | Cu(NO₃)₂·2.5H₂O | DMF Ethanol | 90 | 102.16 | 90 | 10.676 7 | 18.781 | 21.052 | C2/c |
| | 0.084 mmol | | | | | | | | |
| | o-BrBDC | | | | | | | | |
| | 0.085 mmol | | | | | | | | |
| MOF-110 | Cu(NO₃)₂·2.5H₂O | DMF | 90 | 90 | 120 | 20.065 2 | 20.065 | 20.747 | R-3/m |
| | 0.084 mmol | | | | | | | | |
| | Thiophen Dicarbonsre. | | | | | | | | |
| | 0.085 mmol | | | | | | | | |
| MOF-107 | Cu(NO₃)₂·2.5H₂O | DEF | 104.8 | 97.075 | 95.20 6 | 11.032 | 18.067 | 18.452 | P-1 |
| | 0.084 mmol | | | | | | | | |
| | Thiophen Dicarbonsre. | | | | | | | | |
| | 0.085 mmol | | | | | | | | |
| MOF-108 | Cu(NO3)2·2.5H2O | DBF/ Methanol | 90 | 113.63 | 90 | 15.474 7 | 14.514 | 14.032 | C2/c |
| | 0.084 mmol | | | | | | | | |
| | Thiophen Dicarbonsre. | | | | | | | | |
| | 0.085 mmol | | | | | | | | |
| MOF-102 | Cu(NO3)2·2.5H2O | DMF | 91.63 | 106.24 | 112.0 1 | 9.3845 | 10.794 | 10.831 | P-1 |
| | 0.084 mmol | | | | | | | | |
| | H2(BDCCl2) | | | | | | | | |
| | 0.085 mmol | | | | | | | | |
| Clbdc1 | Cu(NO3)2·2.5H2O | DEF | 90 | 105.56 | 90 | 14.911 | 15.622 | 18.413 | P-1 |
| | 0.084 mmol | | | | | | | | |
| | H2(BDCCl2) | | | | | | | | |
| | 0.085 mmol | | | | | | | | |
| Cu(NMOP) | Cu(NO3)2·2.5H2O | DMF | 90 | 102.37 | 90 | 14.923 8 | 18.727 | 15.529 | P2(1)/m |
| | 0.084 mmol | | | | | | | | |
| | NBDC | | | | | | | | |
| | 0.085 mmol | | | | | | | | |
| Tb(BTC) | Tb(NO3)3·5H2O | DMF | 90 | 106.02 | 90 | 18.698 6 | 11.368 | 19.721 | |
| | 0.033 mmol | | | | | | | | |
| | H3BTC | | | | | | | | |
| | 0.033 mmol | | | | | | | | |
| Zn3(BTC)2 | ZnCl2 | DMF Ethanol | 90 | 90 | 90 | 26.572 | 26.572 | 26.572 | Fm-3m |
| Honk | 0.033 mmol | | | | | | | | |
| | H3BTC | | | | | | | | |
| | 0.033 mmol | | | | | | | | |
| Zn4O(NDC) | Zn(NO3)2·4H2O | DMF Ethanol | 90 | 90 | 90 | 41.559 4 | 18.818 | 17.574 | aba2 |
| | 0.066 mmol | | | | | | | | |
| | 14NDC | | | | | | | | |
| | 0.066 mmol | | | | | | | | |
| CdTDC | Cd(NO3)2·4H2O | DMF H2O | 90 | 90 | 90 | 12.173 | 10.485 | 7.33 | Pmma |
| | 0.014 mmol | | | | | | | | |
| | Thiophen | | | | | | | | |
| | 0.040 mmol | | | | | | | | |
| | DABCO | | | | | | | | |
| | 0.020 mmol | | | | | | | | |
| IRMOF-2 | Zn(NO3)2·4H2O | DEF | 90 | 90 | 90 | 25.772 | 25.772 | 25.772 | Fm-3m |
| | 0.160 mmol | | | | | | | | |
| | o-Br-BDC | | | | | | | | |
| | 0.60 mmol | | | | | | | | |
| IRMOF-3 | Zn(NO3)2·4H2O | DEF Ethanol | 90 | 90 | 90 | 25.747 | 25.747 | 25.747 | Fm-3m |
| | 0.20 mmol | | | | | | | | |
| | H2N-BDC | | | | | | | | |
| | 0.60 mmol | | | | | | | | |
| IRMOF-4 | Zn(NO3)2·4H2O | DEF | 90 | 90 | 90 | 25.849 | 25.849 | 25.849 | Fm-3m |
| | 0.11 mmol | | | | | | | | |
| | [C3H7O]2-BDC | | | | | | | | |
| | 0.48 mmol | | | | | | | | |
| IRMOF-5 | Zn(NO3)2·4H2O | DEF | 90 | 90 | 90 | 12.882 | 12.882 | 12.882 | Pm-3m |
| | 0.13 mmol | | | | | | | | |
| | [C5H11O]2-BDC | | | | | | | | |
| | 0.50 mmol | | | | | | | | |
| IRMOF-6 | Zn(NO3)2·4H2O | DEF | 90 | 90 | 90 | 25.842 | 25.842 | 25.842 | Fm-3m |
| | 0.20 mmol | | | | | | | | |
| | [C2H4]-BDC | | | | | | | | |
| | 0.60 mmol | | | | | | | | |
| IRMOF-7 | Zn(NO3)2·4H2O | DEF | 90 | 90 | 90 | 12.914 | 12.914 | 12.914 | Pm-3m |
| | 0.07 mmol | | | | | | | | |
| | 1,4NDC | | | | | | | | |
| | 0.20 mmol | | | | | | | | |
| IRMOF-8 | Zn(NO3)2.4H2O | DEF | 90 | 90 | 90 | 30.092 | 30.092 | 30.092 | Fm-3m |
| | 0.55 mmol | | | | | | | | |
| | 2,6NDC | | | | | | | | |
| | 0.42 mmol | | | | | | | | |
| IRMOF-9 | Zn(NO3)2·4H2O | DEF | 90 | 90 | 90 | 17.147 | 23.322 | 25.255 | Pnnm |
| | 0.05 mmol | | | | | | | | |
| | BPDC | | | | | | | | |
| | 0.42 mmol | | | | | | | | |
| IRMOF-10 | Zn(NO3)2·4H2O | DEF | 90 | 90 | 90 | 34.281 | 34.281 | 34.281 | Fm-3m |
| | 0.02 mmol | | | | | | | | |
| | BPDC | | | | | | | | |
| | 0.012 mmol | | | | | | | | |
| IRMOF-11 | Zn(NO3)2·4H2O | DEF | 90 | 90 | 90 | 24.822 | 24.822 | 56.734 | R-3m |
| | 0.05 mmol | | | | | | | | |
| | HPDC | | | | | | | | |
| | 0.20 mmol | | | | | | | | |
| IRMOF-12 | Zn(NO3)2·4H2O | DEF | 90 | 90 | 90 | 34.281 | 34.281 | 34.281 | Fm-3m |
| | 0.017 mmol | | | | | | | | |
| | HPDC | | | | | | | | |
| | 0.12 mmol | | | | | | | | |
| | | | | | | | | | |
| IRMOF-13 | Zn(NO₃)₂·4H₂O | DEF | 90 | 90 | 90 | 24.822 | 24.822 | 56.734 | R-3m |
| | 0.048 mmol | | | | | | | | |
| | PDC | | | | | | | | |
| | 0.31 mmol | | | | | | | | |
| IRMOF-14 | Zn(NO₃)₂·4H₂O | DEF | 90 | 90 | 90 | 34.381 | 34.381 | 34.381 | Fm-3m |
| | 0.17 mmol | | | | | | | | |
| | PDC | | | | | | | | |
| | 0.12 mmol | | | | | | | | |
| IRMOF-15 | Zn(NO₃)₂·4H₂O | DEF | 90 | 90 | 90 | 21.459 | 21.459 | 21.459 | Im-3m |
| | 0.063 mmol | | | | | | | | |
| | TPDC | | | | | | | | |
| | 0.025 mmol | | | | | | | | |
| IRMOF-16 | Zn(NO₃)₂·4H₂O | DEF NMP | 90 | 90 | 90 | 21.49 | 21.49 | 21.49 | Pm-3m |
| | 0.0126 mmol | | | | | | | | |
| | TPDC | | | | | | | | |
| | 0.05 mmol | | | | | | | | |

- ADC: Acetylenedicarbonsäure
- NDC: Naphtalindicarbonsäure
- BDC: Benzoldicarbonsäure
- ATC: Adamantantetracarbonsäure
- BTC: Benzoltricarbonsäure
- BTB: Benzoltribenzoesäure
- MTB: Methantetrabenzoesäure
- ATB: Adamantantetrabenzoesäure
- ADB: Adamantandibenzoesäure

Weitere metallorganische Gerüstmaterialien sind MOF-2 bis 4, MOF-9, MOF-31 bis 36, MOF-39, MOF-69 bis 80, MOF103 bis 106, MOF-122, MOF-125, MOF-150, MOF-177, MOF-178, MOF-235, MOF-236, MOF-500, MOF-501, MOF-502, MOF-505, IRMOF-1, IRMOF-61, IRMOP-13, IRMOP-51, MIL-17, MIL-45, MIL-47, MIL-53, MIL-59, MIL-60, MIL-61, MIL-63, MIL-68, MIL-79, MIL-80, MIL-83, MIL-85, CPL-1 bis 2, SZL-1 welche in der Literatur beschrieben sind.

Besonders bevorzugte metallorganische Gerüstmaterialien sind MIL-53, Zn-tBuisophthalsäure, Al-BDC, MOF-5, MOF-177, MOF-505, IRMOF-8, IRMOF-11, Cu-BTC, Al-NDC, Al-AminoBDC, Cu-BDC-TEDA, Zn-BDC-TEDA, Al-BTC, Cu-BTC, Al-NDC, Mg-NDC, Al-Fumarat, Zn-2-Methylimidazolat, Zn-2-Aminoimidazolat, Cu-Biphenyldicarboxylat-TEDA, MOF-74, Cu-BPP, Sc-Terephthalat. Weiter mehr bevorzugt sind Sc-Terephthalat, Cu-BTC, Al-BDC und Al-BTC. Insbesondere sind jedoch wegen ihrer Umweltverträglichkeit Mg-Formiat, Mg-Acetat und Gemische davon bevorzugt.

Neben der konventionellen Methode zur Herstellung der MOF, wie sie beispielsweise in US 5,648,508 beschrieben ist, können diese auch auf elektrochemischem Wege hergestellt werden. Diesbezüglich wird auf die DE-A 103 55 087 sowie WO-A 2005/049892 verwiesen. Die auf diesem Weg hergestellten metallorganischen Gerüstmaterialien weisen besonders gute Eigenschaften in Zusammenhang mit der Adsorption und Desorption von chemischen Stoffen, insbesondere von Gasen.

Unabhängig von dessen Herstellung fällt das metallorganische Gerüstmaterial in pulverförmiger bzw. kristalliner Form an. Dieses kann als solches als Sorbens alleine oder zusammen mit anderen Sorbentien oder weiteren Materialien eingesetzt werden. Weiterhin kann das metallorganische Gerüstmaterial in einen Formkörper umgewandelt werden.

Es ist weiterhin bevorzugt, dass das mindestens eine metallorganische Gerüstmaterial einen Anteil von 0,01 Gew.-% bis 10 Gew.-% bezogen auf das Gesamtgewicht des Polymers aufweist. Weiter bevorzugt sind 0,1 Gew.-% bis 10 Gew.-%. Weiter bevorzugt sind 1 Gew.-% bis 10 Gew.-%. Weiter bevorzugt sind 1 Gew.-% bis 5 Gew.-%.

Ein weiterer Gegenstand der vorliegenden Erfindung ist eine Lebensmittelverpackung enthaltend ein erfindungsgemäßes biologisch abbaubares Material. Bei der Lebensmittelverpackung handelt es sich vorzugsweise um eine Obst- oder Gemüseverpackung.

Ein weiterer Gegenstand der vorliegenden Erfindung ist die Verwendung eines erfindungsgemäßen Materials zur Verpackung von Lebensmitteln.

Ein weiterer Gegenstand der vorliegenden Erfindung ist die Verwendung eines porösen metallorganischen Gerüstmaterials bei der Lebensmittelverpackung zum Absorbieren von Ethen.

### Beispiele

### Beispiel 1 Herstellung eines Magnesiumformiat-basierten metallorganischen Gerüstmaterials

| | | |
|---|---|---|
| 1) Magnesiumnitrat*6Wasser | 38,5 mmol | 9,90g |
| 2) Ameisensäure | 106,5 mmol | 4,8g |
| 3) DMF | 2,19 mol | 160,0g |

Es wird das Magnesiumnitrat in DMF in einem Autoklavenbecher aufgelöst. Dazu gibt man die Ameisensäure und rührt die Lösung für 10 min. (pH=3,49)

Kristallisation:
125°C/78h

Ausbau:
Klare Lösung mit weißen Kristallen

Aufarbeitung:
Die Kristalle werden abfiltriert, 2-mal mit 50 ml DMF gewaschen.
Auswaage: 5,162g

### Beispiel 2 Herstellung einer biologisch abbaubaren Folie mit einem metallorganischen Gerüstmaterial mit labortechnischen Mitteln

Es werden 10 g Ecoflex^{®} Pellets in CHCl₃ oder CH₂Cl₂ gelöst, um eine Lösung mit 10 Gew.-% an Polymer zu erhalten. Diese Lösung wird bei Raumtemperatur über Nacht gerührt. Danach werden 1 Gew.-% (Beispiel 2a) oder 5 Gew.-% (Beispiel 2b) Gerüstmaterial aus Beispiel 1 zugegeben. Die erhaltene Suspension wird bis zur Homogenität ca. 30 Minuten gerührt. Die Suspension wird mit Hilfe eines Rakels auf einer Glasplatte verteilt. Nach Abdampfen des Lösemittels erhält man nach etwa 1 Stunde einen Film auf der Glasplatte, der gegebenenfalls mit etwas Wasser von der Platte abgelöst werden kann, um eine Folie zu erhalten.

### Beispiel 3 Adsorptionsmessung

Für das Gerüstmaterial aus Beispiel 1 wird eine Adsorptions-/Desorptionsmessung mit Hilfe einer Rubotherm Magnetschwebewaage (Metallversion mit Dosiersystem) durchgeführt.

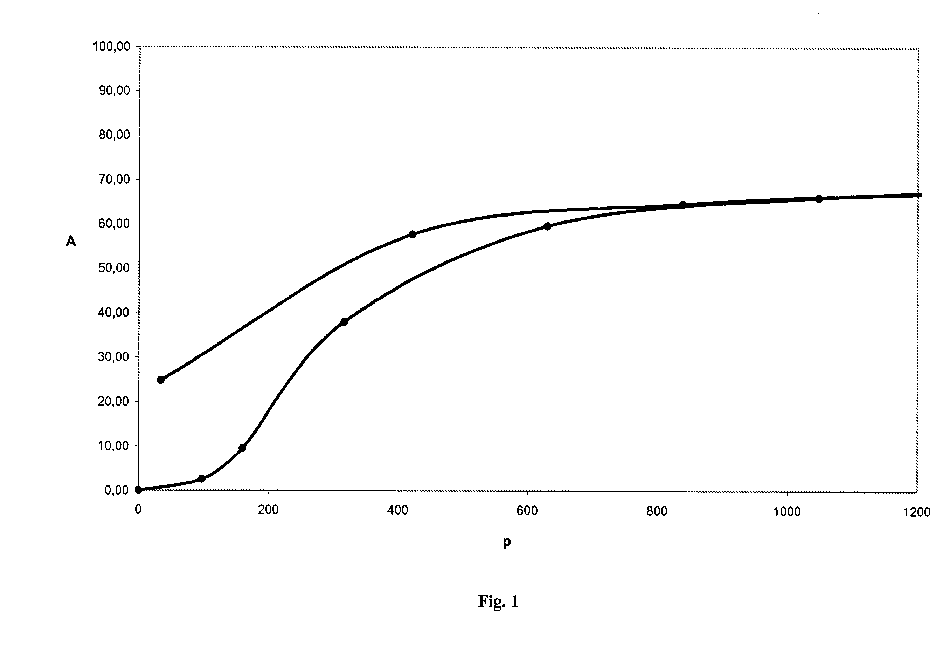

Figur 1 zeigt die Ethenaufnahme bei 298 K. Hierbei ist die Aufnahme A (in mg Ethen / g Gerüstmaterial) als Funktion des absoluten Druckes P (in mbar) dargestellt.

### Beispiel 4 Einfluss von Gerüstmaterial auf den Reifeprozess einer Frucht

Ca. 600 g Bananen werden in einem Trockengefäß bei Raumtemperatur 12 Tage mit 1 g Gerüstmaterial (4a) und ohne Gerüstmaterial (4b) aus Beispiel 1 gelagert.

Danach ergibt sich folgende Beschaffenheit der Bananen:

| | mit MOF (4a) | ohne MOF (4b) |
|---|---|---|
| Konsistenz | weich | sehr weich bis matschig |
| Geruch | süßlich | faulig |

Es zeigt sich, dass durch Anwesenheit des metallorganischen Gerüstmaterials Reifeprozess der Bananen vermindert wird.

### Beispiel 5 Gasadsorptionseigenschaften für Ethen

Die nachfolgende Tabelle zeigt die Aufnahmekapazität für Ethen verschiedener Sorptionsmaterialien bei Raumtemperatur und 1 bar.

| Material | Langmuir Oberfläche (m²/g) | Ethen Aufnahme (Gew.-%) |
|---|---|---|
| Aktivkohle | 1900 | - |
| Zeolith 13X | 700 | 8 |
| Mg-Formiat MOF (Bsp. 1) | 500-600 | 8 |
| Cu-BTC MOF (Basolite® C 300) | 1200 | 17 |

### Beispiel 6 Ethen Permeabilität einer Ecoflex® Folie

Das Gerüstmaterial aus Beispiel 1 wird als Additiv in einer biologisch abbaubaren Folie der Marke Ecoflex® verwendet und die Permeabilität bestimmt. Die nachfolgende Tabelle zeigt die erhaltenen Daten.

| Gew.-% MOF | Foliendicke | Permeabilität |
|---|---|---|
| | (µm) | (cm³*1µm/m³/d/bar) |
| 0 | 223,3 | 5,00E+04 |
| 0 | 191,8 | 5,16E+04 |
| 1 | 199,8 | 5,59E+04 |
| 1 | 207,3 | 1,01E+05 |
| 1 | 196,4 | 1,18E+05 |
| 1 | 172,8 | 1,23E+05 |
| 5 | 198,1 | 5,63E+04 |
| 5 | 225,2 | 1,14E+05 |
| 5 | 194,4 | 1,20E+05 |
| 5 | 206,4 | 1,13E+05 |

## Patentansprüche

1. Biologisch abbaubares Material in Form einer Folie oder eines Films, wobei das Material ein Polymer enthält, wobei das Polymer mindestens ein poröses metallorganisches Gerüstmaterial enthält und das mindestens eine poröse metallorganische Gerüstmaterial mindestens eine an mindestens ein Metallion koordinativ gebundene, mindestens zweizähnige organische Verbindung enthält.

2. Material nach Anspruch 1, **dadurch gekennzeichnet, dass** dieses in Form einer Folie vorliegt.

3. Material nach Anspruch 2, **dadurch gekennzeichnet, dass** die Folie eine Dicke von weniger als 100 µm aufweist.

4. Material nach einem der Ansprüche 1 bis 3, **dadurch gekennzeichnet, dass** das Polymer ein Polyester auf Basis von aliphatischen und aromatischen Dicarbonsäuren und aliphatischen Dihydroxyverbindungen ist.

5. Material nach einem der Ansprüche 1 bis 4, **dadurch gekennzeichnet, dass** das mindestens eine Metallion ein Ion ausgewählt aus der Gruppe der Metalle bestehend aus Mg, Ca und Al, ist.

6. Material nach einem der Ansprüche 1 bis 5, **dadurch gekennzeichnet, dass** die mindestens eine mindestens zweizähnige organische Verbindung sich von Ameisensäure, Essigsäure oder einer aliphatischen Di- oder Polycarbonsäure ableitet.

7. Material nach einem der Ansprüche 1 bis 6, **dadurch gekennzeichnet, dass** das mindestens eine metallorganische Gerüstmaterial einen Anteil von 0,01 Gew.-% bis 10 Gew.-% bezogen auf das Gesamtgewicht des Polymers aufweist.

8. Lebensmittelverpackung enthaltend ein Material nach einem der Ansprüche 1 bis 7.

9. Verwendung eines Materials nach einem der Ansprüche 1 bis 7, zur Verpackung von Lebensmitteln.

10. Verwendung eines porösen metallorganischen Gerüstmaterials bei der Lebensmittelverpackung zum Absorbieren von Ethen.

## Claims

1. A biodegradable material in the form of a foil or a film, where the material comprises a polymer comprising at least one porous metal-organic framework and the at least one porous metal-organic framework comprises at least one at least bidentate organic compound coordinated to at least one metal ion.

2. The material according to claim 1 which is present in the form of a foil.

3. The material according to claim 2, wherein the foil has a thickness of less than 100 µm.

4. The material according to any of claims 1 to 3, wherein the polymer is a polyester based on aliphatic and aromatic dicarboxylic acids and aliphatic dihydroxy compounds.

5. The material according to any of claims 1 to 4, wherein the at least one metal ion is an ion selected from the group of metals consisting of Mg, Ca and Al.

6. The material according to any of claims 1 to 5, wherein the at least one at least bidentate organic compound is derived from formic acid, acetic acid or an aliphatic dicarboxylic or polycarboxylic acid.

7. The material according to any of claims 1 to 6, wherein the at least one metal-organic framework is present in a proportion of from 0.01% by weight to 10% by weight based on the total weight of the polymer.

8. A food packaging comprising a material according to any of claims 1 to 7.

9. The use of a material according to any of claims 1 to 7 for the packaging of foods.

10. The use of a porous metal-organic framework for the absorption of ethene in food packaging.

## Revendications

1. Matériau biologiquement dégradable sous forme d'une feuille ou d'un film, le matériau contenant un polymère, le polymère contenant au moins un matériau de base métallo-organique poreux et le matériau de base métallo-organique poreux contenant au moins un composé organique au moins bidentate, lié par coordination à au moins un ion métallique.

2. Matériau selon la revendication 1, **caractérisé en ce qu'**il se trouve sous forme d'une feuille.

3. Matériau selon la revendication 2, **caractérisé en ce que** la feuille présente une épaisseur de moins de 100 µm.

4. Matériau selon l'une quelconque des revendications 1 à 3, **caractérisé en ce que** le polymère est un polyester à base d'acides dicarboxyliques aliphatiques et aromatiques et de composés aliphatiques dihydroxy.

5. Matériau selon l'une quelconque des revendications 1 à 4, **caractérisé en ce que** ledit au moins un ion métallique est un ion choisi dans le groupe des métaux constitué par Mg, Ca et Al.

6. Matériau selon l'une quelconque des revendications 1 à 5, **caractérisé en ce que** ledit au moins un composé organique au moins bidentate est dérivé diacide formique, diacide acétique ou d'un diacide ou d'un polyacide carboxylique aliphatique.

7. Matériau selon l'une quelconque des revendications 1 à 6, **caractérisé en ce que** ledit au moins un matériau de base métallo-organique représente une proportion de 0,01% en poids à 10% en poids par rapport au poids total du polymère.

8. Emballage pour aliments contenant un matériau selon l'une quelconque des revendications 1 à 7.

9. Utilisation d'un matériau selon l'une quelconque des revendications 1 à 7 pour l'emballage d'aliments.

10. Utilisation d'un matériau de base métallo-organique poreux lors de l'emballage d'aliments en vue de l'absorption d'éthylène.
